# EUROPEAN PATENT APPLICATION

(11) **EP 4 550 866 A1**
(43) Date of publication of application: **07.05.2025**
(21) Application number: 23838847.4
(22) Date of filing: 07.07.2023
(51) Int. Cl.: H04W 16/14, H04W 72/25, H04W 74/08

(54) **COMMUNICATION METHOD AND APPARATUS**

(30) Priority: 14.07.2022 CN 202210832876; 11.08.2022 CN 202210962004
(71) Applicant: Huawei Technologies Co., Ltd., Shenzhen, Guangdong 518129 (CN)
(72) Inventor: LIU, Yun, Shenzhen, Guangdong 518129 (CN); JIAO, Ruicheng, Shenzhen, Guangdong 518129 (CN); XUE, Lixia, Shenzhen, Guangdong 518129 (CN)
(74) Representative: Gill Jennings & Every LLP
(86) International application number: PCT/CN2023/106229
(87) International publication number: WO 2024/012355

(57) **Abstract**

Embodiments of this application provide a communication method and apparatus. The method includes: A first terminal device sends first information to at least one second terminal device, to indicate the at least one second terminal device to perform feedback. The first terminal device receives a feedback of a third terminal device, where the third terminal device is a terminal device that is in the at least one second terminal device and that has performed feedback. The first terminal device sends first resource indication information, to indicate a first resource, where the first resource is for the third terminal device to perform transmission, and the first resource is included in a channel occupancy time COT preempted by the first terminal device. A feedback mechanism between UEs is introduced, so that a UE 1 allocates a COT resource to a UE 2 that has performed feedback. This can reduce a resource waste, and avoid COT interruption, to improve spectrum resource utilization and improve system transmission performance.

## Description

This application claims priority to Chinese Patent Application No. 202210962004.2, filed with the China National Intellectual Property Administration on August 11, 2022 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

With increasing requirements of mobile communication services for spectrums, performing data transmission through unlicensed spectrum resources has become a trend of development. In a sidelink (sidelink, SL) transmission process, a terminal device needs to select, from a resource pool, a physical resource for data transmission. For example, the terminal device may preempt a channel through listen before talk (listen before talk, LBT) or use a resource obtained by another terminal device by preempting a channel, to perform data transmission.

For example, a base station has wide coverage, and may receive resource requests sent by user equipments (user equipments, UEs) within a specific range. However, these UEs may not necessarily detect a message of each other. To be specific, when a UE 1 shares, with another UE, a resource obtained by the UE 1 by preempting a channel, the another UE possibly cannot perform transmission on the allocated resource because the another UE cannot detect a message of the UE 1. This causes a channel occupancy time (channel occupancy time, COT) resource waste, and even results in COT resource interruption or the like.

Therefore, how to ensure resource utilization and system transmission performance is a problem to be urgently resolved.

### SUMMARY

This application provides a communication method and apparatus, to ensure COT resource utilization and further improve system transmission performance.

According to a first aspect, a communication method is provided. The method may be performed by a first terminal device (for example, a UE 1), or may be performed by a chip or a circuit used in the first terminal device. This is not limited in this application. For ease of description, an example in which the method is performed by the first terminal device is used below for description.

The method includes: The first terminal device sends first information to at least one second terminal device, where the first information indicates the at least one second terminal device to perform feedback. The first terminal device receives a feedback of a third terminal device, where the third terminal device is a terminal device that is in the at least one second terminal device and that has performed feedback. The first terminal device sends first resource indication information, where the first resource indication information indicates a first resource, the first resource is for the third terminal device to perform transmission, the first resource is included in a COT preempted by the first terminal device, and the first resource includes a frequency domain resource and/or a time domain resource.

It should be noted that this implementation may be applied to a mode 1 scenario and a mode 2 scenario.

According to the solution provided in this application, the first terminal device is a terminal device that successfully preempts the COT. A feedback mechanism between UEs (to be specific, between the first terminal device and the at least one second terminal device) is introduced, so that the first terminal device allocates the resource in the preempted COT to the third terminal device that has performed feedback. This can reduce a resource waste, and even avoid COT interruption, to improve system transmission performance and ensure a system throughput.

With reference to the first aspect, in some implementations of the first aspect, the first information further indicates at least one resource position for the at least one second terminal device to perform feedback, and the at least one second terminal device one-to-one corresponds to the at least one resource position.

According to the foregoing solution, a specific feedback resource position for each second terminal device is indicated by the first information, so that the first terminal device can accurately know a specific second terminal device that has performed feedback, to facilitate subsequent allocation of a resource to the second terminal device.

With reference to the first aspect, in some implementations of the first aspect, before the first terminal device sends the first information to the at least one second terminal device, the first terminal device receives second information from a network device, where the second information is for determining to allocate, to the at least one second terminal device, a resource in the COT preempted by the first terminal device, and the second information includes identification information of the at least one second terminal device.

It should be noted that, in this implementation, the network device does not allocate the COT resource of the first terminal device in advance and notify the first terminal device of which allocated resources are to be shared with the corresponding at least one second terminal device, but may notify the first terminal device of an identifier of the at least one second terminal device, so that the first terminal device autonomously allocates the resource in the COT to the at least one second terminal device. In other words, the first terminal device has an autonomous allocation capability and opportunity.

According to the foregoing solution, this implementation is mainly applicable to the mode 1 scenario. The first terminal device may determine, based on the second information of the network device, the at least one second terminal device that has a transmission resource requirement. Therefore, the first terminal device may send the first information to the at least one second terminal device in a targeted manner, and share, in a targeted manner with the at least one second terminal device that has a transmission requirement, the COT resource preempted by the first terminal device, so that the COT resource is appropriately used, and the system transmission performance is improved.

With reference to the first aspect, in some implementations of the first aspect, the first information further indicates the at least one second terminal device to perform feedback in the COT in a first mode. After the first terminal device sends the first information to the at least one second terminal device, the first terminal device listens to whether the at least one second terminal device performs feedback in a first time period since the first terminal device performs transmission, where a start moment of the first time period is determined based on the first mode.

According to the foregoing solution, the first terminal device listens to whether the at least one second terminal device performs feedback in the first time period since the first terminal device performs transmission, to determine whether the at least one second terminal device can detect a message sent by the first terminal device, and help determine whether to subsequently allocate the resource in the COT to the at least one second terminal device. This avoids a case in which an allocated resource is not occupied and consequently wasted because the first terminal device still allocates the transmission resource to a second terminal device when the second terminal device does not perform feedback to the first terminal device (to be specific, the first terminal device and the second terminal device cannot detect a message of each other).

With reference to the first aspect, in some implementations of the first aspect, after the first terminal device sends the first resource indication information, the first terminal device listens to a transmission status of the third terminal device on the first resource.

Optionally, when determining that the third terminal device does not perform transmission on the first resource, the first terminal device may further access a channel in time and occupy the first resource, to avoid COT interruption caused by preemption of the first resource by another UE because the first resource is not occupied after 25 µs, where the COT interruption is not conducive to the improvement of the system transmission performance.

According to the foregoing solution, the first terminal device may feed back the transmission status of the third terminal device to the network device in time by listening to the transmission status, so that the network device subsequently performs appropriate resource scheduling. In addition, usage of the first resource can be determined in time through listening, to avoid the COT resource waste or interruption.

With reference to the first aspect, in some implementations of the first aspect, the transmission status of the third terminal device on the first resource includes one or more of the following: whether the third terminal device performs transmission on the first resource; whether there is a hybrid automatic repeat request (hybrid automatic repeat request, HARQ) feedback corresponding to transmission performed by the third terminal device on the first resource; or a result of a HARQ feedback corresponding to transmission performed by the third terminal device on the first resource.

According to the foregoing solution, the transmission status of the third terminal device indicates the transmission status of the third terminal device on the allocated first resource in the COT, and specifically includes: whether the third terminal device performs transmission, whether there is the HARQ feedback for the transmission, and whether the result of the HARQ feedback is a success or failure. Whether the third terminal device completes the transmission may be determined based on the transmission status of the third terminal device, to facilitate subsequent COT resource sharing or appropriate arrangement for the resource scheduling performed by the network device.

With reference to the first aspect, in some implementations of the first aspect, the first terminal device sends third information to the network device, where the third information indicates one or more of the following: a transmission status of the at least one second terminal device; the transmission status of the third terminal device; a fourth terminal device that does not perform feedback, where the fourth terminal device is included in the at least one second terminal device; a fifth terminal device that does not perform transmission on the first resource; a sixth terminal device that fails to perform transmission on the first resource; or a seventh terminal device that successfully performs transmission on the first resource, where the fifth terminal device, the sixth terminal device, and the seventh terminal device are included in the third terminal device.

According to the foregoing solution, the first terminal device feeds back the transmission status of the at least one second terminal device through a PUCCH resource indicated by the network device. This resolves a current problem that the network device cannot obtain a transmission status of another UE. The network device may determine, based on a transmission status of a part or all of the second terminal devices reported by the first terminal device, whether to still allocate resources to these second terminal devices during the subsequent resource scheduling. This implementation can avoid the resource waste, help meet the transmission requirement of the terminal device, and improve transmission performance and a system throughput of a communication system. In addition, the first terminal device feeds back the transmission status of the at least one second terminal device, so that feedback signaling overheads can be reduced, and feedback resources can be saved.

With reference to the first aspect, in some implementations of the first aspect, before the first terminal device receives the second information from the network device, the first terminal device sends resource request information and fourth information to the network device, where the resource request information is for requesting a resource for the first terminal device to perform transmission, and the fourth information includes one or more of the following: identification information of another terminal device detected by the first terminal device through listening, where the another terminal device includes the at least one second terminal device; location information of the first terminal device; or identification information of the first terminal device.

According to the foregoing solution, the network device may further determine, based on the fourth information reported by the first terminal device, a terminal device that is close to the first terminal device or a terminal device that can detect a message of each other with the first terminal device. Based on this, the indication information sent by the network device may include the third terminal device that is determined in advance and that can detect a message of each other with the first terminal device, to reduce a resource waste possibility and reduce signaling overheads for interaction between the devices. In other words, this implementation can improve both validity of COT-sharing information and resource utilization.

According to a second aspect, a communication method is provided. The method may be performed by a network device (for example, a base station), or may be performed by a chip or a circuit used in the network device. This is not limited in this application. For ease of description, an example in which the method is performed by the network device is used below for description.

The method includes: The network device receives third information from a first terminal device, where the third information indicates a transmission status of at least one second terminal device on a resource in a COT preempted by the first terminal device. The network device determines a to-be-scheduled resource based on the third information.

According to the solution provided in this application, the first terminal device feeds back the transmission status of the at least one second terminal device through a PUCCH resource indicated by the network device. This resolves a current problem that the network device cannot obtain a transmission status of another UE. The network device may subsequently schedule the resource in a targeted manner based on the transmission status of a part or all of the second terminal devices that is reported by the first terminal device, to avoid a resource waste, help meet a transmission requirement of the terminal device, and improve transmission performance and a system throughput of a communication system.

With reference to the second aspect, in some implementations of the second aspect, the third information further indicates a transmission status of the first terminal device.

For example, the transmission status of the first terminal device may include one or more of the following: whether the first terminal device shares the preempted COT with the at least one second terminal device, and a transmission status of the first terminal device on the COT resource (including whether there is a HARQ feedback from a peer end for transmission performed by the first terminal device, whether a result of the HARQ feedback is a success or failure, and the like).

According to the foregoing solution, during subsequent resource scheduling, the network device may take a targeted measure based on a COT-sharing status reported by the first terminal device, to meet different transmission requirements of different terminal devices, avoid the resource waste, and improve the transmission performance and the system throughput of the communication system.

With reference to the second aspect, in some implementations of the second aspect, before the network device receives the third information from the first terminal device, the network device sends second information to the first terminal device, where the second information is for determining to allocate, to the at least one second terminal device, the resource in the COT preempted by the first terminal device, and the second information includes identification information of the at least one second terminal device.

According to the foregoing solution, this implementation is mainly applicable to a mode 1 scenario. The network device indicates to share, with the at least one second terminal device, the COT resource preempted by the first terminal device, and the first terminal device may determine, based on the second information of the network device, the at least one second terminal device that has a transmission resource requirement. Therefore, the first terminal device may send first information to the at least one second terminal device in a targeted manner, and share, in a targeted manner with the at least one second terminal device that has a transmission requirement, the COT resource preempted by the first terminal device, so that the COT resource is appropriately used, and the system transmission performance is improved.

With reference to the second aspect, in some implementations of the second aspect, before the network device sends the second information to the first terminal device, the network device receives a scheduling request message from the at least one second terminal device, where the scheduling request message is for requesting a resource for transmission, and includes the identification information of the at least one second terminal device.

According to the foregoing solution, the network device may indicate, based on the scheduling request of the at least one second terminal device, the first terminal device that preempts the COT to share the resource for the at least one second terminal device to perform transmission, to effectively improve a spectrum resource utilization, and meet the transmission requirements of the different terminal devices.

With reference to the second aspect, in some implementations of the second aspect, the transmission status of the at least one second terminal device includes one or more of the following: a transmission status of a third terminal device on the resource in the COT preempted by the first terminal device, where the third terminal device is a terminal device that is in the at least one second terminal device and that performs feedback to the first terminal device; a fourth terminal device that does not perform feedback to the first terminal device, where the fourth terminal device is included in the at least one second terminal device; a fifth terminal device that does not perform transmission on the resource in the COT preempted by the first terminal device; a sixth terminal device that fails to perform transmission on the resource in the COT preempted by the first terminal device; or a seventh terminal device that successfully performs transmission on the resource in the COT preempted by the first terminal device, where the fifth terminal device, the sixth terminal device, and the seventh terminal device are included in the third terminal device.

According to the foregoing solution, the first terminal device feeds back the transmission status of the at least one second terminal device through the PUCCH resource indicated by the network device. This resolves the current problem that the network device cannot obtain the transmission status of the another UE. The network device may subsequently schedule the resource in the targeted manner based on the transmission status of the part or all of the second terminal devices that is reported by the first terminal device, to avoid the resource waste, help meet the transmission requirement of the terminal device, and improve the transmission performance and the system throughput of the communication system.

With reference to the second aspect, in some implementations of the second aspect, the transmission status of the third terminal device on the resource in the COT preempted by the first terminal device includes one or more of the following: whether the third terminal device performs transmission on a first resource, where the first resource is a resource for the third terminal device to perform transmission; whether there is a HARQ feedback corresponding to transmission performed by the third terminal device on the first resource; or a result of a HARQ feedback corresponding to transmission performed by the third terminal device on the first resource.

According to the foregoing solution, the transmission status of the third terminal device indicates a transmission status of the third terminal device on the allocated first resource in the COT, and specifically includes: whether the transmission is performed, whether there is the HARQ feedback for the transmission, and whether the result of the HARQ feedback is a success or failure. Whether the third terminal device completes the transmission may be determined based on the transmission status of the third terminal device, to facilitate subsequent COT resource sharing or appropriate arrangement for the resource scheduling performed by the base station.

With reference to the second aspect, in some implementations of the second aspect, before the network device sends the second information to the first terminal device, the network device receives resource request information and fourth information from the first terminal device, where the resource request information is for requesting a resource for the first terminal device to perform transmission, and the fourth information includes one or more of the following: identification information of another terminal device detected by the first terminal device through listening, where the another terminal device includes the at least one second terminal device; location information of the first terminal device; or identification information of the first terminal device.

According to the foregoing solution, the network device may further determine, based on reporting of the fourth information, a terminal device that is close to the first terminal device or a terminal device that can detect a message of each other with the first terminal device. Based on this, the second information sent by the network device may include the third terminal device that is determined in advance and that can detect a message of each other with the first terminal device, to reduce a resource waste possibility and reduce signaling overheads for interaction between the devices.

According to a third aspect, a communication method is provided. The method may be performed by a first terminal device (for example, a UE 1), or may be performed by a chip or a circuit used in the first terminal device. This is not limited in this application. For ease of description, an example in which the method is performed by the first terminal device is used below for description.

The method includes: The first terminal device obtains a transmission status of a second terminal device on a first resource, where the first resource is included in a COT preempted by the first terminal device, and the first resource includes a time domain resource and/or a frequency domain resource. The first terminal device determines first feedback information based on the transmission status of the second terminal device on the first resource. The first terminal device sends the first feedback information to a network device.

According to the solution provided in this application, the first terminal device is a terminal device that successfully preempts the COT, and the first terminal device feeds back the transmission status of the second terminal device on the resource in the COT to the network device, to resolve a current problem that the network device cannot obtain a transmission status of another UE. The network device may subsequently schedule a resource in a targeted manner based on the transmission status of a part or all of second terminal devices that is reported by the first terminal device, to avoid a resource waste, help meet a transmission requirement of the terminal device, and improve transmission performance and a system throughput of a communication system.

With reference to the third aspect, in some implementations of the third aspect, before the first terminal device obtains the transmission status of the second terminal device on the first resource, the first terminal device sends first resource indication information to the second terminal device, where the first resource indication information indicates the first resource occupied by the second terminal device for transmission.

Optionally, in this implementation, it may be considered that the first resource is determined by the network device, to be specific, the network device determines the first resource based on the COT resource preempted by the first terminal device and a scheduling requirement of the second terminal device. The first terminal device may directly notify the second terminal device of the allocated first resource for the second terminal device to perform transmission.

According to the foregoing solution, the COT resource of the first terminal device is allocated to the second terminal device that has the scheduling requirement. This helps improve a spectrum resource utilization, meet the transmission requirement of the terminal device, and improve the system transmission performance.

With reference to the third aspect, in some implementations of the third aspect, before the first terminal device sends the first resource indication information to the second terminal device, the first terminal device sends first information to the second terminal device, where the first information indicates the second terminal device to perform feedback. The first terminal device receives a feedback from the second terminal device.

It should be understood that, in this implementation, it may be considered that the first resource is determined by the first terminal device. To be specific, the first terminal device may determine, based on feedbacks, specific second terminal devices that can detect a message sent by the first terminal device, and then allocate the preempted COT resource to these second terminal devices, to avoid a resource waste that is caused because a resource is allocated but the second terminal device does not use the resource.

According to the foregoing solution, a feedback mechanism between UEs (to be specific, between the first terminal device and the second terminal device) is introduced, so that the first terminal device may subsequently allocate the resource in the preempted COT to the terminal device that has performed feedback. This can reduce the resource waste, and even avoid COT interruption, to improve the system transmission performance and ensure the system throughput.

With reference to the third aspect, in some implementations of the third aspect, before the first terminal device sends the first resource indication information to the second terminal device, the first terminal device receives second information from the network device, where the second information is for determining to allocate, to the second terminal device, the first resource in the COT preempted by the first terminal device, and the second information includes identification information of the second terminal device.

According to the foregoing solution, the first terminal device may determine, based on the indication information of the network device, the second terminal device that has a transmission resource requirement. Therefore, the first terminal device may send the first information to the second terminal device in a targeted manner, and share, with the second terminal device that has the transmission requirement, the COT resource preempted by the first terminal device, so that the COT resource is appropriately used, and the system transmission performance is improved.

With reference to the third aspect, in some implementations of the third aspect, that the first terminal device obtains a transmission status of a second terminal device on a first resource includes: The first terminal device receives a feedback message from the second terminal device. The first terminal device determines the transmission status of the second terminal device on the first resource based on the feedback message.

It should be noted that the transmission status determined based on the feedback message herein is whether the second terminal device performs transmission on the first resource. For example, if the second terminal device performs feedback in the 16^{th} microsecond to the 25^{th} microsecond, the first terminal device may determine, based on the feedback of the second terminal device, that the second terminal device occupies the first resource.

The foregoing solution provides a first manner of obtaining the transmission status of the second terminal device on the first resource. To be specific, the first terminal device may determine, by using the feedback message of the second terminal device, that the second terminal device performs transmission on the first resource, to determine that the COT resource is used. This ensures resource utilization and the system transmission performance.

With reference to the third aspect, in some implementations of the third aspect, the first information further indicates the second terminal device to perform feedback in the COT in a first mode. After the first terminal device sends the first information to the second terminal device, the first terminal device listens to whether the second terminal device performs feedback in a first time period since the first terminal device performs transmission, where a start moment of the first time period is determined based on the first mode.

According to the foregoing solution, the first terminal device listens to whether at least one second terminal device performs feedback in the first time period since the first terminal device performs transmission, to determine whether the at least one second terminal device can detect a message sent by the first terminal device, and help determine whether to subsequently allocate a resource in the COT to the at least one second terminal device. This avoids a case in which an allocated resource is not occupied and consequently wasted because the first terminal device still allocates the transmission resource to a second terminal device when the second terminal device does not perform feedback to the first terminal device (to be specific, the first terminal device and the second terminal device cannot detect a message of each other).

With reference to the third aspect, in some implementations of the third aspect, that the first terminal device obtains a transmission status of a second terminal device on a first resource includes: The first terminal device listens to the transmission status of the second terminal device on the first resource.

The foregoing solution provides a second manner of obtaining the transmission status of the second terminal device on the first resource. To be specific, the first terminal device may perform listening to determine whether the second terminal device performs transmission on the first resource, so that the first terminal device subsequently determines whether to access the first resource, to ensure that the COT is not interrupted. In addition, this helps the first terminal device subsequently report, to the network device, a transmission status of a second terminal device that has a scheduling requirement, and helps the network device subsequently reallocate a scheduled resource, to ensure effective utilization of a spectrum resource and meet the transmission requirement of the second terminal device.

With reference to the third aspect, in some implementations of the third aspect, the transmission status of the second terminal device on the first resource includes one or more of the following: whether the second terminal device performs transmission on the first resource; whether there is a HARQ feedback corresponding to transmission performed by the second terminal device on the first resource; or a result of a HARQ feedback corresponding to transmission performed by the second terminal device on the first resource.

According to the foregoing solution, the transmission status of the second terminal device indicates the transmission status of the second terminal device on the allocated first resource in the COT, and specifically includes whether the second terminal device performs transmission, whether there is the HARQ feedback for the transmission, and whether the result of the HARQ feedback is a success or a failure. Whether the second terminal device completes the transmission may be determined based on the transmission status of the second terminal device, to facilitate subsequent COT resource sharing or appropriate arrangement for resource scheduling performed by the network device.

With reference to the third aspect, in some implementations of the third aspect, the first terminal device performs transmission on the first resource when determining that the second terminal device does not perform transmission on the first resource.

According to the foregoing solution, the first terminal device accesses a channel in time when the second terminal device does not perform transmission on the first resource, so that the COT resource waste can be reduced, spectrum utilization can be improved, COT interruption can be avoided, the system transmission performance can be ensured, and so on.

With reference to the third aspect, in some implementations of the third aspect, the first feedback information further indicates one or more of the following: a third terminal device that does not perform transmission on the first resource; a fourth terminal device that fails to perform transmission on the first resource; a fifth terminal device that successfully performs transmission on the first resource; or a sixth terminal device that does not perform feedback, where the third terminal device, the fourth terminal device, the fifth terminal device, and the sixth terminal device are included in the second terminal device.

According to the foregoing solution, the first terminal device feeds back the transmission status of the second terminal device through a PUCCH resource indicated by the network device. This resolves a current problem that the network device cannot obtain a transmission status of another UE. The network device may subsequently schedule a resource in a targeted manner based on the transmission status of a part or all of the second terminal devices that is reported by the first terminal device, to avoid the resource waste, help meet the transmission requirement of the terminal device, and improve the transmission performance and the system throughput of the communication system.

With reference to the third aspect, in some implementations of the third aspect, before the first terminal device receives the second information from the network device, the first terminal device sends resource request information and third information to the network device, where the resource request information is for requesting a resource for the first terminal device to perform transmission, and the third information includes one or more of the following: identification information of another terminal device detected by the first terminal device through listening, where the another terminal device includes the second terminal device; location information of the first terminal device; or identification information of the first terminal device.

According to the foregoing solution, the network device may further determine, based on the third information reported by the first terminal device, a terminal device that is close to the first terminal device or a terminal device that can detect a message of each other with the first terminal device. Based on this, the indication information sent by the network device may include the third terminal device that is determined in advance and that can detect a message of each other with the first terminal device, to reduce a resource waste possibility and reduce signaling overheads for interaction between the devices.

According to a fourth aspect, a communication method is provided. The method may be performed by a network device (for example, a base station), or may be performed by a chip or a circuit used in the network device. This is not limited in this application. For ease of description, an example in which the method is performed by the network device is used below for description.

The method includes: The network device receives first feedback information from a first terminal device, where the first feedback information indicates a transmission status of a second terminal device on a first resource, the first resource is included in a COT preempted by the first terminal device, and the first resource includes a time domain resource and/or a frequency domain resource. The network device determines a to-be-scheduled resource based on the first feedback information.

According to the solution provided in this application, the first terminal device feeds back the transmission status of the second terminal device on the resource in the COT to the network device, to resolve a current problem that the network device cannot obtain a transmission status of another UE. The network device may subsequently schedule a resource in a targeted manner based on the transmission status of a part or all of second terminal devices that is reported by the first terminal device, to avoid a resource waste, help meet a transmission requirement of the terminal device, and improve transmission performance and a system throughput of a communication system.

With reference to the fourth aspect, in some implementations of the fourth aspect, before the network device receives the first feedback information from the first terminal device, the network device sends second information to the first terminal device, where the second information is for determining to allocate, to the second terminal device, a first resource in the COT preempted by the first terminal device, and the second information includes identification information of the second terminal device.

According to the foregoing solution, the first terminal device may determine, based on the second information of the network device, the second terminal device that has a transmission resource requirement. Therefore, the first terminal device may subsequently share, in a targeted manner with the second terminal device that has the transmission requirement, the COT resource preempted by the first terminal device, so that the COT resource is appropriately used, and the system transmission performance is improved.

With reference to the fourth aspect, in some implementations of the fourth aspect, before the network device sends the second information to the first terminal device, the network device receives resource request information and third information from the first terminal device, where the resource request information is for requesting a resource for the first terminal device to perform transmission, and the third information includes one or more of the following: identification information of another terminal device detected by the first terminal device through listening, where the another terminal device includes the second terminal device; location information of the first terminal device; or identification information of the first terminal device.

According to the foregoing solution, the network device may further determine, based on the third information reported by the first terminal device, a terminal device that is close to the first terminal device or a terminal device that can detect a message of each other with the first terminal device. Based on this, the indication information sent by the network device may include a third terminal device that is determined in advance and that can detect a message of each other with the first terminal device, to reduce a resource waste possibility and reduce signaling overheads for interaction between the devices

According to a fifth aspect, a communication method is provided. The method may be performed by a first terminal device (for example, a UE 1), or may be performed by a chip or a circuit used in the first terminal device. This is not limited in this application. For ease of description, an example in which the method is performed by the first terminal device is used below for description.

The method includes: The first terminal device sends first resource indication information to a second terminal device, where the first resource indication information indicates a first resource occupied by the second terminal device for transmission, and the first resource is included in a COT preempted by the first terminal device, and the first resource includes a time domain resource and/or a frequency domain resource. The first terminal device listens to a transmission status of the second terminal device on the first resource. The first terminal device determines, based on the transmission status of the second terminal device on the first resource, whether to occupy the first resource.

It should be noted that this implementation is mainly applicable to a mode 2 scenario.

According to the solution provided in this application, when the second terminal device does not perform transmission on the first resource, the first terminal device accesses a channel in time and occupies the first resource, to avoid that the first resource is preempted by another UE because the first resource is not occupied after 25 µs. This manner can not only reduce a COT resource waste, but also avoid COT interruption, to help ensure system transmission performance.

With reference to the fifth aspect, in some implementations of the fifth aspect, the first terminal device determines the first resource indication information.

For example, the first terminal device senses a channel resource or determines a transmission requirement of the second terminal device based on reservation information of another UE, and allocates, to the second terminal device, the first resource (for example, a first time period starting from the 1^{st} slot) in the COT resource preempted by the first terminal device. Optionally, the first resource may be greater than a resource needed for the second terminal device to perform transmission; or the first resource may be less than a resource needed for the second terminal device to perform transmission, and a remaining resource that is needed is shared with the second terminal device or the like next time. This is not specifically limited in this application.

With reference to the fifth aspect, in some implementations of the fifth aspect, the first terminal device performs transmission on the first resource when determining that the second terminal device does not perform transmission on the first resource.

According to the foregoing solution, the first terminal device accesses the channel in time when the second terminal device does not perform transmission on the first resource, so that the COT resource waste can be reduced, and the system transmission performance can be ensured.

With reference to the fifth aspect, in some implementations of the fifth aspect, the first resource indication information further indicates a second resource occupied by a third terminal device for transmission, the second resource is included in the COT preempted by the first terminal device, the second resource includes a time domain resource and/or a frequency domain resource, and a time domain in which the second resource is located is after a time domain in which the first resource is located.

In other words, in the mode 2 scenario, the first terminal device may determine, based on the reservation information of the another UE, that the second terminal device and the third terminal device have the transmission requirement. Correspondingly, the first terminal device may allocate transmission resources, namely, the first resource and the second resource, to both the second terminal device and the third terminal device by using the first resource indication information. For example, a transmission position of the first resource is before that of the second resource.

According to the foregoing solution, when the third terminal device does not perform transmission on the second resource, the first terminal device accesses the channel in time and occupies the second resource, to avoid that the second resource is preempted by another UE because the second resource is not occupied after 25 µs. This manner can not only reduce the COT resource waste, but also avoid the COT interruption, to help ensure the system transmission performance.

With reference to the fifth aspect, in some implementations of the fifth aspect, the first terminal device sends second resource indication information to the third terminal device, where the second resource indication information indicates a second resource, the second resource is for the third terminal device to perform transmission, the second resource is included in the COT preempted by the first terminal device, and the second resource includes a time domain resource and/or a frequency domain resource, and a time domain in which the second resource is located is after a time domain in which the first resource is located.

According to the foregoing solution, in this implementation, the transmission resource may be provided to the third terminal device again, to avoid that the third terminal device does not receive, for some reasons, the second resource indicated by the first resource indication information. The allocated second resource may be determined based on the second resource indication information, to improve resource utilization and the transmission performance.

According to a sixth aspect, a communication method is provided. The method may be performed by a second terminal device (for example, a UE 2), or may be performed by a chip or a circuit used in the second terminal device. This is not limited in this application. For ease of description, an example in which the method is performed by the second terminal device is used below for description.

The method includes: The second terminal device receives first resource indication information from a first terminal device, where the first resource indication information indicates a first resource occupied by the second terminal device for transmission, the first resource is included in a COT preempted by the first terminal device, and the first resource includes a time domain resource and/or a frequency domain resource. The second terminal device performs transmission on the first resource.

According to the solution provided in this application, the second terminal device may determine the first resource based on the first resource indication information, and perform transmission on the first resource. A transmission status of the second terminal device may include one or more of the following: whether there is a HARQ feedback for the transmission performed by the second terminal device on the first resource, and whether a result of the HARQ feedback is a success or a failure.

Optionally, after determining the first resource based on the first resource indication information, the second terminal device may alternatively not perform transmission due to some reasons. This case is not excluded from this application. In this case, the first terminal device may listen to the transmission status of the second terminal device on the first resource, and may access a channel and use the first resource when determining that the second terminal device does not use the first resource, to avoid a COT resource waste and COT interruption.

According to a seventh aspect, a communication method is provided. The method may be performed by a network device (for example, a base station), or may be performed by a chip or a circuit used in the network device. This is not limited in this application. For ease of description, an example in which the method is performed by the network device is used below for description.

The method includes: The network device sends first indication information to a first terminal device, and sends second indication information to a second terminal device, where the first indication information indicates a transmission resource and a first physical uplink control channel (physical uplink control channel, PUCCH) resource, and the second indication information indicates the transmission resource and a second PUCCH resource. The network device receives first feedback information from the second terminal device on the second PUCCH resource, where the first feedback information indicates a transmission status of the second terminal device on a first resource, and the first resource is included in a COT preempted by the first terminal device.

For example, the network device may indicate the transmission resource and PUCCH resources to a plurality of terminal devices respectively by using DCI.

In other words, the network device sends one piece of DCI to each terminal device that has a scheduling requirement, to indicate the transmission resource (namely, the COT) that may be preempted and a PUCCH resource corresponding to each UE. When failing to preempt the transmission opportunity, each UE (for example, a UE 2) may use, for transmission, the COT preempted by a UE 1, and report a HARQ result for the transmission through a PUCCH resource that belongs to the UE and that is indicated by the network device.

According to the solution provided in this application, the plurality of terminal devices (including the UE 2 that uses the COT resource preempted by the UE 1) may determine the respective PUCCHs based on transmission statuses, and report the transmission statuses to the network device, so that the network device knows an actual transmission status of each terminal device, and a COT-sharing resource is appropriately allocated in a targeted manner subsequently, to avoid a COT resource waste.

With reference to the seventh aspect, in some implementations of the seventh aspect, the transmission status of the second terminal device on the first resource includes one or more of the following: whether the second terminal device performs transmission on the first resource; whether there is a HARQ feedback corresponding to transmission performed by the second terminal device on the first resource; or a result of a HARQ feedback corresponding to transmission performed by the second terminal device on the first resource.

According to the foregoing solution, the transmission status of the second terminal device indicates the transmission status of the second terminal device on the allocated resource in the COT, and whether the second terminal device completes the transmission may be determined based on the transmission status of the second terminal device, to facilitate subsequent COT resource sharing or appropriate arrangement for resource scheduling performed by the network device.

With reference to the seventh aspect, in some implementations of the seventh aspect, the network device receives second feedback information from the first terminal device on the first PUCCH resource, where the second feedback information indicates a transmission status of the first terminal device in the COT preempted by the first terminal device.

For example, the transmission status of the first terminal device may be: whether the first terminal device shares, with the second terminal device, the COT preempted by the first terminal device, whether there is a HARQ feedback from a peer end for transmission performed by the first terminal device on the COT resource, and whether a result of a HARQ feedback is a success or a failure.

According to an eighth aspect, a communication method is provided. The method may be performed by a second terminal device (for example, a UE 2), or may be performed by a chip or a circuit used in the second terminal device. This is not limited in this application. For ease of description, an example in which the method is performed by the second terminal device is used below for description.

The method includes: The second terminal device receives second indication information from a network device, where the second indication information indicates a transmission resource and a second physical uplink control channel PUCCH resource. The second terminal device receives first resource indication information, where the first resource indication information indicates a first resource, the first resource is for the second terminal device to perform transmission, and the first resource is included in a COT preempted by a first terminal device. The second terminal device determines first feedback information based on a transmission status on the first resource. The second terminal device sends the first feedback information to the network device on the second PUCCH resource.

According to the solution provided in this application, the second terminal device may determine, based on the second indication information of the network device, the PUCCH resource for feeding back the transmission status, and report the transmission status of the second terminal device to the network device on the indicated PUCCH resource, so that the network device knows an actual transmission status of each terminal device, and a COT-sharing resource is appropriately allocated in a targeted manner subsequently, to avoid a COT resource waste.

With reference to the eighth aspect, in some implementations of the eighth aspect, the transmission status of the second terminal device on the first resource includes one or more of the following: whether the second terminal device performs transmission on the first resource; whether there is a HARQ feedback corresponding to transmission performed by the second terminal device on the first resource; or a result of a HARQ feedback corresponding to transmission performed by the second terminal device on the first resource.

According to the foregoing solution, the transmission status of the second terminal device indicates the transmission status of the second terminal device on the allocated resource in the COT, and whether the second terminal device completes the transmission may be determined based on the transmission status of the second terminal device, to facilitate subsequent COT resource sharing or appropriate arrangement for resource scheduling performed by the network device.

According to a ninth aspect, a communication method is provided. The method may be performed by a network device (for example, a base station), or may be performed by a chip or a circuit used in the network device. This is not limited in this application. For ease of description, an example in which the method is performed by the network device is used below for description.

The method includes: The network device sends first indication information to a first terminal device, where the first indication information indicates a transmission resource, is further for determining to allocate, to a second terminal device, a resource in a COT preempted by the first terminal device, and includes identification information of the second terminal device. The network device sends configuration information to the second terminal device, where the configuration information is for configuring a periodic physical uplink control channel PUCCH resource. The network device receives first feedback information from the second terminal device on a second physical uplink control channel PUCCH resource, where the first feedback information indicates a transmission status of the second terminal device on a first resource, the first resource is included in the COT preempted by the first terminal device, the second PUCCH resource is determined based on a transmission position of the first resource, and the second PUCCH resource is included in the periodic PUCCH resource.

For example, the network device may indicate, by using DCI, the first terminal device to preempt the COT and share the resource in the COT with the second terminal device.

For example, that the second PUCCH resource is determined based on a transmission position of the first resource may be understood as: The second PUCCH resource is the 1^{st} PUCCH resource spaced by a first slot after the first resource, or the second PUCCH resource is the 1^{st} PUCCH resource spaced by a first slot after a resource for a HARQ feedback corresponding to transmission on the first resource.

In other words, the network device configures the periodic PUCCH resource for the second terminal device, so that the second terminal device determines, based on the resource position of the transmission performed by the second terminal device in the COT preempted by the first terminal device, a resource position for replying a PUCCH, and reports a transmission result of the second terminal device to the network device at the resource position of the PUCCH.

According to the solution provided in this application, the second terminal device may determine, based on the transmission status on the first resource and from the periodic PUCCH resource configured by the network device, the PUCCH resource specifically for feeding back the transmission status of the second terminal device, and then report the transmission status of the second terminal device to the network device on the indicated PUCCH resource, so that the network device knows an actual transmission status of each terminal device, and a COT-sharing resource is appropriately allocated in a targeted manner subsequently, to avoid a COT resource waste.

With reference to the ninth aspect, in some implementations of the ninth aspect, the transmission status of the second terminal device on the first resource includes one or more of the following: whether the second terminal device performs transmission on the first resource; whether there is a HARQ feedback corresponding to transmission performed by the second terminal device on the first resource; or a result of a HARQ feedback corresponding to transmission performed by the second terminal device on the first resource.

According to the foregoing solution, the transmission status of the second terminal device indicates the transmission status of the second terminal device on the allocated resource in the COT, and whether the second terminal device completes the transmission may be determined based on the transmission status of the second terminal device, to facilitate subsequent COT resource sharing or appropriate arrangement for resource scheduling performed by the network device.

According to a tenth aspect, a communication method is provided. The method may be performed by a second terminal device (for example, a UE 2), or may be performed by a chip or a circuit used in the second terminal device. This is not limited in this application. For ease of description, an example in which the method is performed by the second terminal device is used below for description.

The method includes: The second terminal device receives first resource indication information, where the first resource indication information indicates a first resource, the first resource is for the second terminal device to perform transmission, and the first resource is included in a COT preempted by a first terminal device. The second terminal device receives configuration information from a network device, where the configuration information is for configuring a periodic physical uplink control channel PUCCH resource. The second terminal device determines a second PUCCH resource based on a transmission position of the first resource, where the second PUCCH resource is included in the periodic PUCCH resource. The second terminal device sends first feedback information to the network device on the second PUCCH resource, where the first feedback information indicates a transmission status of the second terminal device on the first resource.

According to the solution provided in this application, the second terminal device may determine, based on the transmission status on the first resource and from the periodic PUCCH resource configured by the network device, the PUCCH resource specifically for feeding back the transmission status of the second terminal device, and then report the transmission status of the second terminal device to the network device on the indicated PUCCH resource, so that the network device knows an actual transmission status of each terminal device, and a COT-sharing resource is appropriately allocated in a targeted manner subsequently, to avoid a COT resource waste.

With reference to the tenth aspect, in some implementations of the tenth aspect, the transmission status of the second terminal device on the first resource includes one or more of the following: whether the second terminal device performs transmission on the first resource; whether there is a HARQ feedback corresponding to transmission performed by the second terminal device on the first resource; or a result of a HARQ feedback corresponding to transmission performed by the second terminal device on the first resource.

According to the foregoing solution, the transmission status of the second terminal device indicates the transmission status of the second terminal device on the allocated resource in the COT, and whether the second terminal device completes the transmission may be determined based on the transmission status of the second terminal device, to facilitate subsequent COT resource sharing or appropriate arrangement for resource scheduling performed by the network device.

With reference to the tenth aspect, in some implementations of the tenth aspect, the second PUCCH resource is the 1^{st} PUCCH resource spaced by a first slot after the first resource, or the second PUCCH resource is the 1^{st} PUCCH resource spaced by a first slot after a resource for the HARQ feedback corresponding to the transmission on the first resource.

According to an eleventh aspect, a communication method is provided. The method may be performed by a first terminal device (for example, a UE 1), or may be performed by a chip or a circuit used in the first terminal device. This is not limited in this application. For ease of description, an example in which the method is performed by the first terminal device is used below for description.

The method includes: The first terminal device sends resource request information and first information to a network device, where the resource request information is for requesting a resource for the first terminal device to perform transmission, and the first information includes one or more of the following: identification information of another terminal device detected by the first terminal device through listening, where the another terminal device includes at least one second terminal device; location information of the first terminal device; or identification information of the first terminal device.

According to a twelfth aspect, a communication method is provided. The method may be performed by a network device (for example, a base station), or may be performed by a chip or a circuit used in the network device. This is not limited in this application. For ease of description, an example in which the method is performed by the network device is used below for description.

The method includes: The network device receives resource request information and first information from a first terminal device. The network device determines a to-be-scheduled resource based on the resource request information and the first information, where the resource request information is for requesting a resource for the first terminal device to perform transmission, and the first information includes one or more of the following: identification information of another terminal device detected by the first terminal device through listening, where the another terminal device includes at least one second terminal device; location information of the first terminal device; or identification information of the first terminal device.

According to a thirteenth aspect, a communication apparatus is provided, including: a transceiver unit, configured to send first information to at least one second terminal device, where the first information indicates the at least one second terminal device to perform feedback, the transceiver unit is further configured to receive a feedback of a third terminal device, and the third terminal device is a terminal device that is in the at least one second terminal device and that has performed feedback; and a processing unit, configured to generate first resource indication information, where the first resource indication information indicates a first resource, the first resource is for the third terminal device to perform transmission, is included in a COT preempted by a first terminal device, and includes a frequency domain resource and/or a time domain resource. The transceiver unit is further configured to send the first resource indication information.

The transceiver unit may perform receiving and sending processing in the first aspect, the third aspect, the fifth aspect, or the eleventh aspect, and the processing unit may perform processing other than the receiving and sending in the first aspect, the third aspect, the fifth aspect, or the eleventh aspect.

According to a fourteenth aspect, a communication apparatus is provided, including: a transceiver unit, configured to receive second information from a first terminal device, where the second information indicates a transmission status of at least one second terminal device on a resource in a COT preempted by the first terminal device; and a processing unit, configured to determine a to-be-scheduled resource based on the second information.

The transceiver unit may perform receiving and sending processing in the second aspect, the fourth aspect, the seventh aspect, or the ninth aspect, and the processing unit may perform processing other than the receiving and sending in the second aspect, the fourth aspect, the seventh aspect, or the ninth aspect.

According to a fifteenth aspect, a communication apparatus is provided, including: a transceiver unit, configured to receive first resource indication information, where the first resource indication information indicates a first resource; the first resource is for a second terminal device to perform transmission, and is included in a COT preempted by a first terminal device; and the transceiver unit is further configured to receive configuration information from a network device, and the configuration information is for configuring a periodic physical uplink control channel PUCCH resource; and a processing unit, configured to determine a second PUCCH resource based on a transmission position of the first resource, where the second PUCCH resource is included in the periodic PUCCH resource. The transceiver unit is further configured to send first feedback information to the network device on the second PUCCH resource, where the first feedback information indicates a transmission status of the second terminal device on the first resource.

The transceiver unit may perform receiving and sending processing in the sixth aspect, the eighth aspect, the tenth aspect, or the twelfth aspect, and the processing unit may perform processing other than the receiving and sending in the sixth aspect, the eighth aspect, the tenth aspect, or the twelfth aspect.

According to a sixteenth aspect, a communication apparatus is provided, including a transceiver, a processor, and a memory. The processor is configured to control the transceiver to receive and send a signal, the memory is configured to store a computer program, and the processor is configured to invoke the computer program from the memory and run the computer program, so that the communication apparatus performs the method in any possible implementation of the first aspect to the twelfth aspect.

Optionally, there are one or more processors and one or more memories.

Optionally, the memory may be integrated with the processor, or the memory and the processor are separately disposed.

Optionally, the communication apparatus further includes a transmitter and a receiver.

According to a seventeenth aspect, a communication system is provided, including a network device, a first terminal device, and at least one second terminal device.

According to an eighteenth aspect, a computer-readable storage medium is provided. The computer-readable storage medium stores a computer program or code; and when the computer program or the code is run on a computer, the computer is enabled to perform the method in any possible implementation of the first aspect to the twelfth aspect.

According to a nineteenth aspect, a chip is provided, including at least one processor, where the at least one processor is coupled to a memory, the memory is configured to store a computer program, and the processor is configured to invoke the computer program from the memory and run the computer program, so that an apparatus in which the chip is installed performs the method in any possible implementation of the first aspect to the twelfth aspect.

The chip may include an input circuit or interface configured to send information or data and an output circuit or interface configured to receive information or data.

According to a twentieth aspect, a computer program product is provided. The computer program product includes computer program code; and when the computer program code is run on an apparatus, the apparatus is enabled to perform the method in any possible implementation of the first aspect to the twelfth aspect.

### BRIEF DESCRIPTION OF DRAWINGS

FIG. 1 is a diagram of an example of a communication system usable in this application;
FIG. 2 is a diagram of another example of a communication system usable in this application;
FIG. 3 is a diagram of an example of a COT resource scheduling scenario to which this application is applicable;
FIG. 4 is a schematic flowchart of a first communication method 400 according to an embodiment of this application;
FIG. 5 is a diagram of COT resource allocation applied to a mode 1 scenario and a mode 2 scenario according to an embodiment of this application;
FIG. 6 is a diagram of COT resource allocation applied to a mode 2 scenario according to an embodiment of this application;
FIG. 7 is a schematic flowchart of a second communication method 700 according to an embodiment of this application;
FIG. 8 is a diagram of feeding back a transmission status on a COT resource to a UE 1 by another UE according to an embodiment of this application;
FIG. 9 is a diagram of listening, by a UE 1, a transmission status of another UE on a COT resource according to an embodiment of this application;
FIG. 10 is a schematic flowchart of a third communication method 1000 according to an embodiment of this application;
FIG. 11 is a diagram of continuously monitoring slot occupancy by a UE that starts a COT according to an embodiment of this application;
FIG. 12 is a diagram of continuously monitoring slot occupancy by a UE occupying a previous slot according to an embodiment of this application;
FIG. 13 is a schematic flowchart of a fourth communication method 1300 according to an embodiment of this application;
FIG. 14 is a schematic flowchart of a fifth communication method 1400 according to an embodiment of this application;
FIG. 15 is a schematic flowchart of a sixth communication method 1500 according to an embodiment of this application;
FIG. 16 is a diagram of reporting, by a UE 1, a resource request and information about a UE 2 detected through listening according to an embodiment of this application;
FIG. 17 is a diagram of reporting a resource request and location information of a UE 1 by the UE 1 according to an embodiment of this application;
FIG. 18 is a diagram of a structure of a communication apparatus according to an embodiment of this application; and
FIG. 19 is a diagram of a structure of another communication apparatus according to an embodiment of this application.

### DESCRIPTION OF EMBODIMENTS

The following describes technical solutions of this application with reference to the accompanying drawings.

The technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

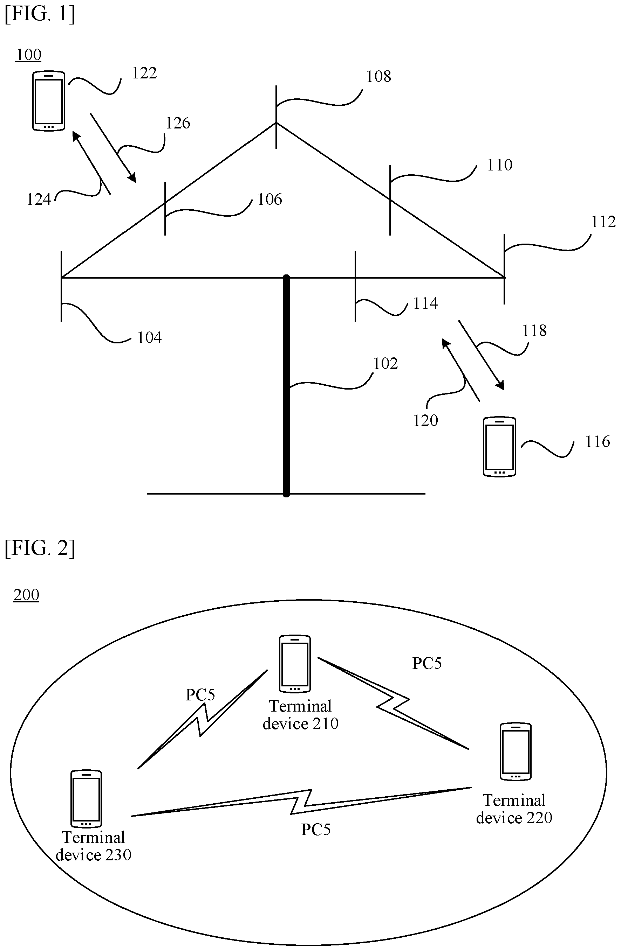

FIG. 1 is a diagram of a communication system 100 usable in this application. As shown in FIG. 1, the communication system 100 includes an access network device 102. The access network device 102 may include a plurality of antennas, for example, antennas 104, 106, 108, 110, 112, and 114. In addition, the access network device 102 may additionally include a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving.

The access network device 102 may communicate with a plurality of terminal devices (for example, a terminal device 116 and a terminal device 122). It may be understood that the access network device 102 may communicate with any quantity of terminal devices similar to the terminal device 116 or 122. As shown in the figure, the terminal device 116 communicates with the antennas 112 and 114. The antennas 112 and 114 send information to the terminal device 116 through a forward link 118, and receive information from the terminal device 116 through a reverse link 120. In addition, the terminal device 122 communicates with the antennas 104 and 106. The antennas 104 and 106 send information to the terminal device 122 through a forward link 124, and receive information from the terminal device 122 through a reverse link 126.

For example, in an FDD system, the forward link 118 may use a frequency band different from that used by the reverse link 120, and the forward link 124 may use a frequency band different from that used by the reverse link 126.

For another example, in a TDD system and a full duplex system, the forward link 118 and the reverse link 120 may use a common frequency band, and the forward link 124 and the reverse link 126 may use a common frequency band.

Each antenna (or an antenna group including a plurality of antennas) and/or area designed for communication are/is referred to as a sector of the access network device 102. For example, an antenna group may be designed to communicate with a terminal device in a sector within a coverage area of the access network device 102. In a process in which the access network device 102 communicates with the terminal devices 116 and 122 respectively through the forward links 118 and 124, a transmit antenna of the access network device 102 may improve signal-to-noise ratios of the forward links 118 and 124 through beamforming. In addition, in comparison with a manner in which an access network device sends, through a single antenna, a signal to all terminal devices served by the access network device, a mobile device in a neighboring cell suffers less interference when the access network device 102 sends, through beamforming, a signal to the terminal devices 116 and 122 that are randomly dispersed within a related coverage area.

In a given period of time, the access network device 102, the terminal device 116, or the terminal device 122 may be a wireless communication sending apparatus and/or a wireless communication receiving apparatus. When sending data, the wireless communication sending apparatus may encode the data for transmission. Specifically, the wireless communication sending apparatus may obtain (for example, generate, receive from another communication apparatus, or store in a memory) a particular quantity of data bits to be sent to the wireless communication receiving apparatus through a channel. The data bits may be included in a transport block (or a plurality of transport blocks) of the data, and the transport block may be segmented to generate a plurality of code blocks.

In addition, the communication system 100 may be a public land mobile network (public land mobile network, PLMN), a device-to-device (device-to-device, D2D) communication system, a machine-to-machine (machine-to-machine, M2M) communication system, a vehicle-to-everything (vehicle-to-everything, V2X) communication system, or the like. FIG. 1 is merely a simplified diagram as an example. The network may further include another access network device that is not shown in FIG. 1.

Optionally, in embodiments of this application, the terminal device and the access network device can perform wireless communication (for example, perform uplink information or downlink information transmission) through an unlicensed spectrum resource. The communication system 100 may use a licensed-assisted access (licensed-assisted access, LAA) technology, dual connectivity (dual connectivity, DC) technology, a standalone (standalone) technology, or the like.

An unlicensed carrier (namely, an unlicensed spectrum) is a spectrum that can be directly used without a license under a regulation of a government department (for example, the State Radio Regulation Committee). In daily life, microwave ovens, remote-control toy aircraft, wireless mouse devices, wireless keyboards, wireless fidelity (wireless fidelity, Wi-Fi), and the like all use unlicensed carriers. Resource sharing in an unlicensed band means that for use of a particular spectrum, limitations are posed only on indicators such as transmit power and out-of-band leakage, to ensure that a plurality of devices sharing the band meet a basic coexistence requirement. An operator can implement network capacity offloading by using an unlicensed band resource, but needs to comply with regulatory requirements of different regions and different spectrums on the unlicensed band resource. These requirements are generally formulated to protect common systems such as a radar and ensure that multiple systems do not impose harmful impact to each other as much as possible and fairly coexist, and include a transmit power limitation, an out-of-band leakage index, and indoor and outdoor use limitations, and some regions further have some additional coexistence policies and the like.

It should be noted that the technical solutions of this application are mainly applied to a sidelink transmission scenario, and a used frequency band includes but is not limited to an unlicensed spectrum. The unlicensed spectrum includes a frequency band near 2.4 GHz, a frequency band near 5.8 GHz, and the like.

FIG. 2 is a diagram of an example of a communication system 200 usable in this application. As shown in FIG. 2, the communication system 100 includes three communication devices, for example, a terminal device 210, a terminal device 220, and a terminal device 230. The terminal devices may perform data communication through D2D or V2X communication. A communication link between every two of the terminal device 210, the terminal device 220, and the terminal device 230 is an SL.

It should be noted that, in V2X, two types of interfaces are defined: a Uu interface, namely, a communication protocol interface between a terminal device and a network device; and a sidelink SL transmission interface, also referred to as a PC5 interface, namely, a communication protocol between terminal devices. A sidelink is a communication direct link between terminal devices. A direct link may be understood as a link on which data transmission is directly performed between two terminal devices, and there is no other network node between the two terminal devices.

It should be understood that, in an actual application scenario, the terminal devices shown in the figure may be terminal devices in various forms. Details are not described one by one in the figure in embodiments of this application.

The terminal device in embodiments of this application may be a user equipment UE, an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a station in a WLAN, or may be a smartphone, a portable computer, a global positioning system, a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function or another processing device connected to a wireless modem, a vehicle-mounted device, an internet-of-vehicles terminal, a computer, a laptop computer, a handheld paging device, a handheld computing device, a satellite wireless device, a wireless modem card, a set top box (set top box, STB), a customer premises equipment (customer premise equipment, CPE), and/or another device for paging in a wireless system and a next generation paging system, for example, a terminal device in a 5G network or a terminal device in a future evolved public land mobile network PLMN.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user, for example, is a head-mounted display. The wearable device is not only a hardware device, but also implements a powerful function through software support, data exchange, and cloud interaction. In a broad sense, wearable intelligent devices include full-featured and large-size devices that can implement all or some functions without depending on smartphones, for example, smartwatches or smart glasses, and devices that focus on only one type of application and need to be used together with other devices such as smartphones, for example, various smart bands and smart jewelry for monitoring physical signs.

In addition, in embodiments of this application, the terminal device may alternatively be a terminal device in an internet-of-things (internet of things, IoT) system, or may include another device, for example, a relay, that can perform data communication with a network device (for example, a base station). This is not limited in embodiments of this application.

In embodiments of this application, the terminal device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a Windows operating system, that implement service processing through a process. The application layer includes applications such as a browser, an address book, word processing software, and instant messaging software. In addition, a specific structure of an execution body of the method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by a terminal device or a functional module that is in the terminal device and that can invoke and execute the program.

For ease of understanding of embodiments of this application, terms or technologies in this application are first described briefly.

### 1. Sidelink unlicensed (sidelink unlicensed, SL-U)

The SL-U mainly means performing SL transmission in an unlicensed spectrum (unlicensed spectrum). For the unlicensed spectrum, two access mechanisms, including a type 1 and a type 2, are introduced in a standard. The type 1 is applied to a channel preemption scenario, and LBT needs to be performed, to be specific, listening needs to be performed before transmission. The listening herein may be energy detection, to be specific, detecting energy in 9 µs. If the energy exceeds a threshold, it indicates that a UE occupies a resource. If the energy does not exceed a threshold, it indicates that no UE occupies a resource. The type 2 is applied to sharing of a transmission resource preempted by another UE in the type 1. For example, a UE 1 preempts, in the type 1, a transmission opportunity (referred to as a COT in a standard) that is in a period of time, and may indicate another UE to access, in the type 2, a remaining transmission opportunity that is other than a transmission period occupied by the UE 1 and that is in the COT occupied by the UE 1.

It should be noted that the type 2 further includes a type 2A and a type 2B. The type 2A refers to occupying a channel when 25 µs elapse after transmission performed by another UE ends, in other words, the channel may be occupied if it is found by sensing the channel that no other UE uses the channel in 25 µs. The type 2B refers to occupying a channel when 16 µs elapse after transmission performed by another UE ends. A difference from the type 2A is 9 µs, namely, duration of one sensing slot.

It should be understood that "an SL system operating in an unlicensed spectrum" may be described as an "SL-U system", and "a terminal device operating in an SL-U system" may be described as an "SL-U device".

### 2. Physical sidelink feedback channel (physical sidelink feedback channel, PSFCH)

HARQ feedback information for a physical sidelink shared channel (physical sidelink shared channel, PSSCH) is generally sent on a PSFCH feedback channel. Each UE can use an independent PSFCH resource. In unicast and multicast scenarios supporting SL HARQ feedback, HARQ feedback information that is specifically sent is as follows:
(1) Unicast: A PSSCH transport block (transport block, TB) is decoded. If the decoding succeeds, a receive UE sends a HARQ-ACK. If the decoding fails, a HARQ-NACK is sent.
(2) Multicast: Whether to send a HARQ feedback is determined based on a TX-RX UE distance and/or reference signal received power (reference signal received power, RSRP). For example, a HARQ-NACK is sent if a physical sidelink control channel (physical sidelink control channel, PSCCH) fails to be decoded, and no signal is sent in another case. All receive UEs in one group can share a same PSFCH. For another example, a receive UE sends a HARQ-ACK if decoding succeeds, or a HARQ-NACK is sent if decoding fails.

It should be understood that a PSFCH of at least one symbol (symbol) is supported in the unicast and the multicast, and uses a sequence in a PUCCH format 0 as a baseline. In a resource pool, a PSFCH feedback resource appears in a periodicity of N slots (slots), where a value of N may be 1, 2, or 4. For a PSSCH in a slot n, a PSFCH corresponding to the PSSCH appears in a slot n+a, where a is a smallest integer greater than or equal to K. Assuming that K values for all UEs are the same, when the PSFCH resource appears in the periodicity N, PSFCHs corresponding to N PSSCHs share one PSFCH resource.

### 3. SL resource pool (resource pool)

In NR, SL transmission is performed based on a resource pool. Each resource pool includes one or more subchannels (subchannels). Frequency domain resources (namely, quantities of physical resource blocks (physical resource blocks, PRBs)) occupied by subchannels in a same resource pool are the same, and frequency domain resources occupied by subchannels in different resource pools may be different.

It should be understood that the resource pool is a logical concept. One resource pool includes a plurality of physical resources, and any one of the physical resources is for data transmission. Each UE needs to select one resource from the resource pool during data transmission. The resource selection process includes the following two cases:
(1) The UE is controlled by a network device, and selects one resource from the resource pool based on indication information of the network device to perform data transmission. This is also referred to as a mode 1.
(2) The UE autonomously selects one resource from the resource pool to perform data transmission. This is also referred to as a mode 2. In other words, the UE has an opportunity to autonomously determine the resource selection and resource allocation. The UE may sense occupancy of a spectrum to exclude some occupied resources or resources with high interference, and select a transmission resource from an idle resource or a resource with low interference.

The following describes a resource scheduling method in the mode 1 and defined in NR SL.

The resource scheduling method in the mode 1 includes the following four steps: First, a base station (a gNB) sends downlink control information (downlink control information, DCI) (for example, DCI 3_0) to a UE 1, where the DCI indicates a scheduled resource. Next, the UE 1 sends a signal to a UE 2 on the scheduled resource. Then, the UE 2 returns feedback information, namely, a PSFCH, to the UE 1. Finally, the UE 1 returns a PUCCH to the gNB. The PUCCH carries related information about whether the UE 1 successfully sends data.

For example, the downlink control information DCI 3_0 may carry an information domain for determining a time interval between the foregoing steps. For example, a time gap field is for determining a time interval between the DCI 3_0 and the 1^{st} scheduled resource, namely, a PSSCH or a PSSCH, an sl-PSFCH-to-PUCCH field is for determining a time interval between the PSFCH and the PUCCH, and a time interval between communicated data and the PSFCH may be determined based on information such as a PSFCH configuration periodicity of a resource pool.

In addition, the DCI 3_0 may further carry a time-frequency position of a transmission resource, where a time position of each resource is determined relative to a time position of the 1^{st} resource. For example, a time domain position of the 1^{st} PSSCH may be determined based on the time gap field in the DCI 3_0, a time-frequency position of a scheduled resource, namely, a PSSCH or a PSSCH, may be determined based on frequency resource assignment and time resource assignment indicated by the DCI 3_0, a time position of the PSFCH may be determined based on the PSSCH or PSSCH resource, and a time position for sending the PUCCH may be determined based on the time position of the PSFCH and a parameter in the sl-PSFCH-to-PUCCH field. Specific resource information of the PUCCH may be determined by using a PUCCH resource indicator in the DCI 3_0.

In a current mode 1 scenario, the base station has wide coverage, and may receive resource requests sent by UEs within a specific range. However, these UEs may not be capable of detecting a message of each other due to a long mutual distance. To be specific, when a UE 1 shares, with another UE, a resource obtained by the UE 1 by preempting a channel, the another UE may not be capable of performing transmission on the allocated resource because the another UE cannot detect a message of the UE 1. This causes a COT resource waste, and even results in COT resource interruption or the like.

In addition, in the mode 1 scenario, when the gNB notifies the UE 1 of a transmission resource by using signaling, a PUCCH for the UE 1 may be determined based on the signaling. However, because a UE 2 does not receive signaling from the gNB, the UE 2 has no corresponding PUCCH position. Therefore, after the UE 1 indicates a resource needed by the UE 2 for transmission, there is no way to notify the gNB of a transmission result of the UE 2.

It should be noted that, in a mode 2 scenario, COT-sharing information sent by a UE 1 may not be necessarily received by a UE 2. For example, the UE 2 is in a sending state and cannot receive transmission from the UE 1. Alternatively, the UE 2 receives transmission from a UE 3 on a same time-frequency resource, but a distance between the UE 3 and the UE 1 is large. Consequently, the UE 1 does not detect channel occupancy of the UE 3, and finally the UE 2 does not detect the COT-sharing information sent by the UE 1. As a result, the UE 2 cannot perform transmission on a COT resource preempted by the UE 1, and the COT may be preempted by another UE, causing COT interruption.

In addition, the COT-sharing information sent by the UE 1 may not be necessarily detected by the UE 3. If the COT-sharing information cannot be received correctly, it means that 50% of a COT-sharing resource may be wasted when two UEs (for example, the UE 1 and the UE 3) share the resource. Amore serious problem is that if an allocated resource is not occupied, a COT transmission opportunity may be preempted after 25 µs. Further, the UE 3 also sends COT-sharing information to the UE 1 subsequently when LBT succeeds. This also causes a waste of up to 50% of a resource. Because a base station does not know specific locations of other UEs (for example, the UE 2 and the UE 3) during the sending of the COT-sharing information, and it is difficult to provide specific time-frequency resources for HARQ feedbacks of the other UEs, the base station does not know actual transmission statuses of the other UEs, and may further allocate resources to the other UEs when subsequently allocating COT-sharing resources again, causing a resource waste once more.

In conclusion, how to ensure that COT-sharing related information sent by the UE 1 can be received by another UE to reduce a resource waste and avoid COT interruption, how the UE 1 notifies, in the mode 1 scenario, the gNB of a transmission status of another UE that uses a COT resource of the UE 1, and how the another UE that uses the COT resource of the UE 1 feeds back a transmission result to the gNB are technical problems to be urgently resolved.

In view of this, this application provides a communication method and apparatus. A feedback mechanism between UEs is introduced, and a UE 1 allocates a COT resource to a UE 2 that has performed feedback, to reduce a resource waste and avoid COT interruption. A transmission status of the UE 2 on the allocated COT resource preempted by the UE 1 is reported through a PUCCH resource for the UE 1, and a transmission status of another UE on an allocated COT resource preempted by the UE 1 is reported through a PUCCH resource indicated by a base station, so that the base station subsequently knows a transmission status of another UE having a scheduling requirement and further determines a to-be-scheduled resource, to improve spectrum resource utilization and improve system transmission performance.

For ease of understanding of embodiments of this application, the following descriptions are provided.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in this application, "at least one" indicates one or more, "a plurality of" indicates two or more, and "and/or" describes an association relationship between associated objects, and represents that three relationships may exist. For example, A and/or B may represent the following cases: Only A exists, both A and B exist, and only B exists, where A and B may be singular or plural. In descriptions of this application, the character "/" usually indicates an "or" relationship between associated objects. "At least one of the following items (pieces)" or a similar expression thereof refers to any combination of these items, including any combination of singular items (pieces) or plural items (pieces). For example, at least one of a, b, and c may indicate a, b, c, a and b, a and c, b and c, or a, b, and c. Each of a, b, and c may be singular or plural.

Third, in this application, "first", "second", and various numbers (for example, #1 and #2) indicate differentiation for ease of description, but are not intended to limit the scope of embodiments of this application, for example, are for distinguishing different messages or the like rather than describing a particular order or sequence. It should be understood that objects described in such a way are interchangeable in an appropriate circumstance, so that a solution other than embodiments of this application can be described.

It should be noted that, in the following, meanings represented by "information #1", "resource indication information #1", and "resource request information #1" are different from each other. Similarly, meanings represented by "information #11", "resource indication information #11", "indication information #11", "resource request information #11", and "feedback information #11" are also different from each other. There may also be other cases. It should be understood that names of information are merely examples for description. This is not limited in this application, and should not constitute any limitation on the technical solutions of this application.

Fourth, in this application, descriptions such as "when...", "in a case of...", and "if" all mean that a device performs corresponding processing in an objective case, are not intended to limit time, do not require the device to perform a determining action during implementation, and do not mean that there is another limitation.

Fifth, in this application, terms "include", "contain" and any other variants thereof are intended to cover non-exclusive inclusion. For example, a process, method, system, product, or device that includes a series of steps or units is not necessarily limited to those steps or units that are clearly listed, but may include other steps or units that are not explicitly listed or are inherent to such a process, method, product, or device.

Sixth, in this application, "indicate" may include a direct indication and an indirect indication. When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The term "indication information" in embodiments of this application may be an explicit indication, namely, a direct indication using signaling or an indication obtained based on a parameter indicated by signaling in combination with another rule or another parameter or obtained through deduction; or may be an implicit indication, namely, an indication obtained based on a rule, a relationship, or another parameter or obtained through deduction. This is not specifically limited in this application.

Seventh, in this application, "protocols" may be standard protocols in the communication field, and for example, may include a 5G protocol, a new radio (new radio, NR) protocol, and a related protocol for a future communication system. This is not limited in this application. The term "pre-configuration" may include pre-definition, for example, definition in a protocol. The "pre-definition" may be implemented by prestoring corresponding code or a corresponding table in a device; or implemented in another manner of indicating related information. A specific implementation of the "pre-definition" is not limited in this application.

Eighth, in this application, "storage" may mean storage in one or more memories. The one or more memories may be separately disposed, or may be integrated into an encoder or a decoder, a processor, or a communication apparatus. Alternatively, a part of the one or more memories may be separately disposed, and the other part of the one or more memories are integrated into a decoder, a processor, or a communication apparatus. A type of the memory may be a storage medium in any form. This is not limited in this application.

Ninth, in this application, "communication" may also be described as "data transmission", "information transmission", "data processing", or the like. The "transmission" includes "sending" and "receiving". This is not limited in this application.

Tenth, in this application, a "first terminal device" may be described as a "UE 1", a "second terminal device" may be described as a "UE 2", a "third terminal device" may be described as a "UE 3", and the rest can be deduced by analogy. Special emphasis is not provided in this application.

The technical solutions provided in this application are described below in detail with reference to the accompanying drawings.

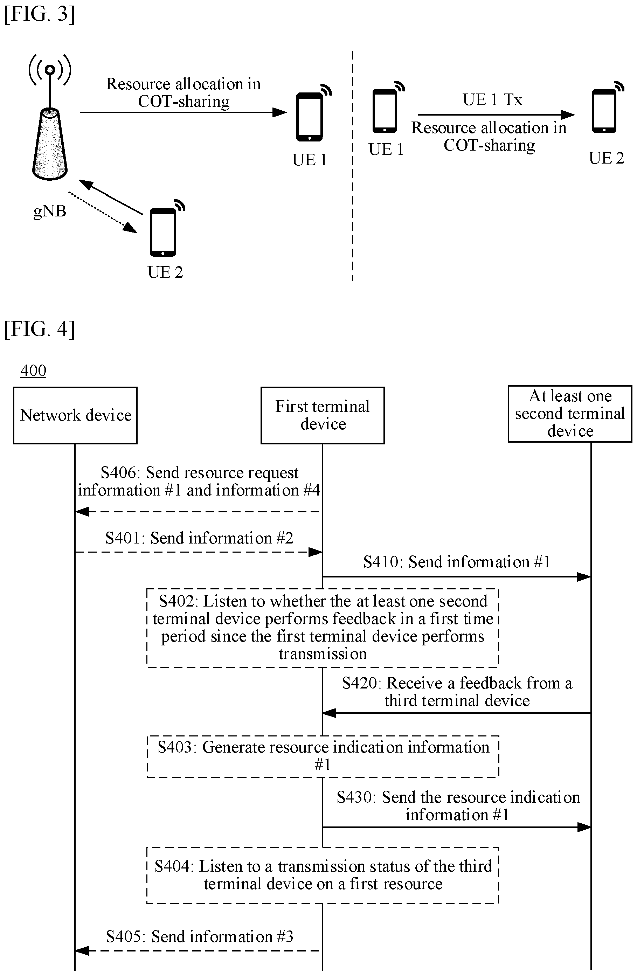

FIG. 3 is a diagram of an example of a COT resource scheduling scenario to which this application is applicable. As shown in FIG. 3, a left side of a dashed line is a COT resource scheduling method in a mode 1 scenario. For example, a base station (a gNB) receives a scheduling request from a UE 2, and sends COT-sharing related information to a UE 1, where the COT-sharing related information indicates the UE 1 to share a preempted COT resource with the UE 2 for the UE 2 to send data. A right side of the dashed line is: In a mode 2 scenario, a UE 1 sends COT-sharing related information to a UE 2, where the COT-sharing related information is for determining to allocate, to the UE 2 for the UE 2 to perform transmission, a COT resource preempted by the UE 1.

The following describes an example in which the COT-sharing related information sent by the UE 1 can be received by another UE and an example of how the UE 1 notifies, in the mode 1 scenario, the gNB of a transmission status of another UE that uses the COT resource of the UE 1.

FIG. 4 is a schematic flowchart of a first communication method 400 according to an embodiment of this application. In this implementation, a UE 1 determines, based on a feedback received from the UE 2, that the UE 2 can detect a message of the UE 1, and then allocates, based on the feedback message, a COT-sharing resource preempted by the UE 1. It should be understood that this implementation may be applied to a mode 1 scenario and a mode 2 scenario. As shown in FIG. 4, the method includes the following plurality of steps.

S410: The first terminal device sends information #1 (namely, an example of first information) to at least one second terminal device.

Correspondingly, a third terminal device receives the information #1 from the first terminal device.

The information #1 indicates the at least one second terminal device to perform feedback.

For example, the information #1 may be a broadcast message.

It should be noted that a quantity of third terminal devices is not specifically limited in this application.

In a possible implementation, the information #1 further indicates at least one resource position for the at least one second terminal device to perform feedback, and the at least one second terminal device one-to-one corresponds to the at least one resource position.

In other words, the information #1 may further indicate a resource position for the at least one second terminal device to perform feedback to the first terminal device, and a quantity of indicated resource positions for performing feedback one-to-one corresponds to a quantity of the at least one second terminal device. It should be understood that, the description herein may be specific to a case in which there are a plurality of second terminal devices, and it is ensured that each second terminal device has a corresponding feedback resource position. For example, when there are the plurality of second terminal devices, the information #1 may indicate one or more time domain resource positions and a plurality of corresponding frequency domain resource positions for performing feedback. For example, the information #1 indicates the plurality of second terminal devices to simultaneously perform feedback at respective frequency domain positions, or the information #1 indicates the plurality of second terminal devices to perform feedback at respective frequency domain positions and in respective specified time periods. This is not specifically limited in this application.

For example, the information #1 may explicitly or implicitly indicate a resource position (for example, a frequency domain resource for a PSFCH) for the UE 2 to feed back whether the message of the UE 1 is detected.

In another possible implementation, the information #1 further indicates the at least one second terminal device to perform feedback in a COT in a first mode.

For example, the first mode may be a type 2B in a current standard, to be specific, indicating the at least one second terminal device to perform feedback after 16 µs. In other words, a channel starts to be occupied when 16 µs elapse after the 1^{st} segment of transmission performed by another UE, that is, the channel may be occupied if it is found, by sensing the channel, that no other UE uses the channel in 16 µs. It should be noted that, in the technical solution of this application, the type 2B is used as an example for description, in other words, the information #1 indicates the UE 2 to perform feedback when 16 µs elapse after the 1^{st} segment of transmission performed by the UE 1.

For example, the first mode may be a type 2A in a current standard, to be specific, indicating the at least one second terminal device to perform feedback after 25 µs. In other words, a channel starts to be occupied when 25 µs elapse after the 1^{st} segment of transmission performed by another UE, that is, the channel may be occupied if it is found, by sensing the channel, that no other UE uses the channel in 25 µs.

It should be noted that feedback duration of the second terminal device is not specifically limited in this application, and may be greater than 9 µs or may be less than 9 µs. In the technical solution of this application, the at least one second terminal device is indicated to perform feedback in the type 2B. The second terminal device needs to ensure that the feedback is performed in the 16^{th} microsecond to the 25^{th} microsecond that are after the 1^{st} segment of transmission performed by the first terminal device, so that the first terminal device can detect the feedback through listening, and further allocate a resource to the second terminal device.

Optionally, when a network device determines that the first terminal device preempts the COT resource and the at least one second terminal device has a scheduling requirement, the network device may indicate the first terminal device to share the preempted COT resource with the at least one second terminal device for transmission. To be specific, the method further includes step S401 before step S410.

S401: The network device sends information #2 (namely, an example of second information) to the first terminal device.

Correspondingly, the first terminal device receives the information #2 from the network device.

The information #2 is for determining to allocate, to the at least one second terminal device, a resource in the COT preempted by the first terminal device, and the information #2 includes identification information of the at least one second terminal device, for example, an ID of the at least one UE 2.

It should be noted that the first terminal device preempts a channel use opportunity, namely, the COT resource, in a type 1 in an LBT procedure, and may use, based on the information #2 of the network device, the resource with the second terminal device for data transmission.

Optionally, the information #2 may further include information such as a demanded data amount of the at least one second terminal device. For example, the network device may determine, based on a UE 2 having a largest demanded data amount, a time domain resource (for example, a quantity of slots or a quantity of milliseconds) and/or a frequency domain resource (for example, a quantity of subchannels, a quantity of RBs, or a quantity of interlaces) that are/is to be occupied.

It should be noted that, in this implementation, the network device does not allocate the COT resource of the first terminal device in advance and notify the first terminal device of which allocated resources are to be shared with the corresponding at least one second terminal device, but may notify the first terminal device of the identifier of the at least one second terminal device, so that the first terminal device autonomously allocates the resource in the COT to the at least one second terminal device. In other words, the first terminal device has an autonomous allocation capability and opportunity.

For example, assuming that there are two second terminal devices, when determining that the first terminal device preempts the COT resource in the LBT procedure, the network device may indicate, by using the information #2, the first terminal device to share the COT resource with the two second terminal devices for data transmission.

Optionally, the network device receives a scheduling request message from the at least one second terminal device, so that the network device collects the UE 2 having a transmission requirement. The scheduling request message may include information such as the ID of the UE 2 or an ID of a peer UE communicating with the UE 2.

Optionally, before the network device indicates the first terminal device to share the COT resource with the at least one second terminal device, the first terminal device may actively report resource request information #1 and information #4 for consideration by the network device during COT-sharing resource allocation, to avoid a problem that UEs cannot detect each other. To be specific, the method further includes step S406 before step S401.

S406: The first terminal device sends the resource request information #1 (namely, an example of resource request information) and the information #4 (namely, an example of fourth information) to the network device.

Correspondingly, the network device receives the resource request information #1 and the information #4 from the first terminal device.

The resource request information #1 is for requesting a resource for the first terminal device to perform transmission, and the information #4 includes one or more of the following: identification information of another terminal device detected by the first terminal device through listening, where the another terminal device includes the at least one second terminal device; location information of the first terminal device; or identification information of the first terminal device.

For example, when reporting a buffer status report (buffer status report, BSR) to the base station, the first terminal device includes the location information of the first terminal device, or includes a source ID and a destination ID that are obtained through SCI sensing.

For example, the resource request information #1 is for requesting the transmission resource from the network device, and the network device may further indicate a position for the first terminal device to preempt the COT resource, in other words, data transmission is performed on the preempted COT resource.

For example, the identification information of the first terminal device may be an ID of the UE 1, may be an IP address of the UE 1, or may be an external identifier, for example, a generic public subscription identifier (generic public subscription identifier, GPSI), of the UE 1. The location information of the first terminal device may be absolute coordinates or relative coordinates of a geographical location. This is not specifically limited in this application.

Optionally, after sending the information #1, the first terminal device may listen to whether the at least one second terminal device performs feedback. If no feedback is detected through listening, the first terminal device may occupy the channel to continue to perform transmission. If a feedback is detected through listening, the first terminal device does not need to occupy the channel. This implementation can avoid interruption of the preempted COT. The method further includes step S402 after S410.

S402: The first terminal device listens to whether the at least one second terminal device performs feedback in a first time period since the first terminal device performs transmission.

A start moment of the first time period is determined based on the first mode.

It should be understood that, on a sidelink, the first terminal device performs transmission by segments. When the first terminal device sends the information #1, it indicates that the 1^{st} segment of transmission has been completed by the first terminal device. In this case, the first terminal device may still have to-be-communicated data, or may have completed the transmission during the 1^{st} segment of transmission. This is not specifically limited in this application. Optionally, in the 2^{nd} segment of transmission performed by the first terminal device, the to-be-communicated data and updated COT-sharing information may continue to be communicated, or an empty data packet may be sent to avoid the COT resource interruption or the like.

For example, if the first terminal device indicates the at least one second terminal device to perform feedback in the type 2B in the standard, the start moment of the first time period is a moment when 16 µs elapse after the 1^{st} segment of transmission is completed by the first terminal device.

For example, if the first terminal device indicates the at least one second terminal device to perform feedback in the type 2A in the standard, the start moment of the first time period is a moment when 25 µs elapse after the 1^{st} segment of transmission is completed by the first terminal device.

In a possible implementation, if the information #1 in step S410 indicates the at least one second terminal device to perform feedback in the COT in the type 2B, and if the UE 1 detects that the channel is not occupied in the 16^{th} microsecond to the 25^{th} microsecond, the UE 1 may determine that the second terminal device does not perform transmission on a first resource, and continue to occupy the channel in the type 2A, or otherwise, the UE 1 continues to occupy the channel after the UE 2 completes the feedback, and allocates a COT resource to a UE 3 that has performed feedback to the UE 1.

It should be noted that, if the UE 1 does not sense in an additional sensing slot, namely, 9 µs (that is, from the 16^{th} microsecond to the 25^{th} microsecond), that the channel is occupied, it indicates that the channel is actually in an idle state. In this case, the UE 1 may occupy the slot in the type 2A, to avoid that the COT is preempted by other transmission when a transmission interval exceeds 25 µs.

Further, after step S410 or S402, the method further includes:
S420: The first terminal device receives a feedback from the third terminal device.

Correspondingly, the third terminal device sends the feedback to the first terminal device.

It should be understood that the third terminal device is a terminal device that is in the at least one second terminal device and that has performed feedback. In other words, the third terminal device and the first terminal device may detect a message of each other.

In a possible implementation, if the information #1 in step S410 further indicates the at least one resource position for the at least one second terminal device to perform feedback, the first terminal device receives the feedback of the at least one second terminal device at the at least one resource position. For example, there are two second terminal devices, and correspondingly, the information #1 sent by the first terminal device further indicates a resource position #1 and a resource position #2 for performing feedback. In this case, the first terminal device may receive feedback information of the 1^{st} second terminal device at the resource position #1, and receive feedback information of the 2^{nd} second terminal device at the resource position #2. In this implementation, specific second terminal devices that have performed feedback can be more accurately located.

In another possible implementation, the information #1 in step S410 further indicates the at least one second terminal device to perform feedback in the COT in the first mode. For example, the information #1 indicates to perform feedback in the type 2B, and correspondingly, the first terminal device receives feedback information in the 16^{th} microsecond to the 25^{th} microsecond. For another example, the information #1 indicates to perform feedback in the type 2A, and correspondingly, the first terminal device receives feedback information after 25 µs.

It should be noted that step S402 and step S420 may be understood as synchronous processes. In step S402, the listening is mainly performed in the 16^{th} microsecond to the 25^{th} microsecond, and then the first terminal device determines whether to continue to occupy the channel to perform transmission. In step S420, duration in which the first terminal device receives the feedback from the third terminal device may exceed the range of the 16^{th} microsecond to the 25^{th} microsecond.

Optionally, if step S420 does not occur, none of the UEs 2 performs feedback to the UE 1. To be specific, the UE 1 does not receive a feedback from any UE 2. This means that the COT resource is only used by the UE 1 to perform data transmission.

Optionally, when the first terminal device receives the feedback of the third terminal device, it indicates that the first terminal device and the third terminal device can detect the message of each other. Therefore, the first terminal device may generate resource indication information #1, indicating a resource for the third terminal device to perform transmission. To be specific, the method further includes step S403 after S420.

S403: The first terminal device generates the resource indication information #1 based on the third terminal device that has performed feedback.

For example, the COT preempted by the first terminal device includes a frequency domain resource #1 to a frequency domain resource #5 and a time domain resource #1 to a time domain resource #3. The first terminal device may determine, based on a quantity (for example, 2) of third terminal devices that have performed feedback and a demanded data transmission amount, to allocate the time domain resource #1 and the frequency domain resource #1 to the frequency domain resource #3 to the 1^{st} UE 3, and allocate the time domain resource #2 and the frequency domain resource #4 to the 2^{nd} UE 3.

A specific implementation in which the first terminal device generates the resource indication information is not specifically limited in this application.

Further, because the feedback is received from the third terminal device, the first terminal device may use the preempted COT resource with the third terminal device for the third terminal device to perform transmission. To be specific, the method further includes step S430 after step S420 or S403.

S430: The first terminal device sends the resource indication information #1 (namely, an example of first resource indication information).

Correspondingly, the third terminal device receives the resource indication information #1 from the first terminal device.

The resource indication information #1 indicates the first resource, and the first resource is for the third terminal device to perform transmission, is included in the channel occupancy time COT preempted by the first terminal device, and includes a frequency domain resource and/or a time domain resource.

Optionally, the resource indication information #1 may be sent in a broadcast manner, or may be directly sent by the first terminal device to the third terminal device. This is not specifically limited in this application.

For example, the first resource may be the time domain resource, for example, the 1^{st} to 5^{th} slots in the COT resource preempted by the first terminal device, and the third terminal device may perform transmission in the specified slots.

In a possible implementation, the resource indication information #1 indicates the first resource (or a resource position), and the base station indicates that the first resource is for the third terminal device to perform transmission.

In another possible implementation, the resource indication information #1 indicates the first resource (or a resource position), and further indicates that the first resource is for the third terminal device to perform transmission.

In other words, the base station or the first terminal device may indicate that the first resource is for the third terminal device to perform transmission. This is not specifically limited in this application.

It should be noted that a quantity of third terminal devices is not specifically limited in this application. For example, when there are a plurality of third terminal devices, there are also a plurality of corresponding first resources, in other words, the plurality of third terminal devices one-to-one correspond to the plurality of first resources. For example, there are three third terminal devices. In this case, the resource indication information #1 may indicate the 1^{st} UE 3 to perform transmission on a resource #1, indicate the 2^{nd} UE 3 to perform transmission on a resource #2, and indicate the 3^{rd} UE 3 to perform transmission on a resource #3. The resource #1, the resource #2, and the resource #3 are collectively referred to as the first resource. In other words, the third terminal device is a terminal device that can detect the message sent by the first terminal device and successfully performs feedback to the first terminal device.

It should be understood that, because not every UE 2 definitely performs feedback to the UE 1, the UE 1 in the technical solution of this application allocates a resource based on a UE 2 (for example, the UE 3) that performs feedback, and does not allocate a resource to the UE 2 that does not perform feedback, to avoid a COT resource waste. It is assumed herein that UEs within coverage of the base station may not necessarily detect a signal of each other. Once a distance is long or a channel is very poor, another UE may not detect the information #1 sent by the UE 1 in step S410. Therefore, the another UE does not perform feedback to the UE 1. To ensure appropriate use of the COT resource, the UE 1 allocates the COT resource to the UE 3 that has performed feedback. To be specific, COT-sharing related information carried in indication information #2 received in step S401 is not directly notified to the UE 2. Instead, the first resource (for example, COT-sharing information) indicated by the resource indication information #1 sent by the UE 1 is determined through screening depending on whether there is a feedback or another factor.

It should be noted that, because a delay is needed for the UE 1 to receive the feedback and update the COT-sharing information, the UE 1 still performs data transmission in a process of determining the UE 3 based on the received feedback. In addition, in a data transmission process, the updated COT-sharing information is notified to the UE 3 that has performed feedback, to be specific, the UE 3 is notified of a time-frequency domain resource for the transmission.

Optionally, after the first terminal device shares the first resource with the third terminal device, the first terminal device may listen to a transmission status of the third terminal device on the allocated resource. To be specific, the method further includes step S404 after step S430.

S404: The first terminal device listens to the transmission status of the third terminal device on the first resource.

For example, the first terminal device may listen to, through energy detection or by detecting a value of sidelink control information (sidelink control information, SCI), whether the third terminal device occupies a resource of a frequency band and/or PSFCH reply (for example, an ACK or a NACK) information of the third terminal device. The ACK/NACK is listened to for specific transmission content. For example, the energy detection may be understood as that the first terminal device detects energy in 9 µs (namely, from the 16^{th} microsecond to the 25^{th} microsecond). If the energy exceeds a threshold, it indicates that a UE occupies the resource. If the energy does not exceed a threshold, it indicates that no UE occupies the resource.

It should be noted that a specific implementation in which the first terminal device listens to the channel resource is not specifically limited in this application.

The transmission status of the third terminal device on the first resource includes one or more of the following: whether the third terminal device performs transmission on the first resource; whether there is a hybrid automatic repeat request HARQ feedback corresponding to transmission performed by the third terminal device on the first resource; or a result of a HARQ feedback corresponding to transmission performed by the third terminal device on the first resource.

It should be understood that the third terminal device that has performed feedback in the technical solution of this application usually performs transmission on the resource allocated by the first terminal device to the third terminal device. In other words, when the third terminal device has a transmission requirement and can detect the message of the first terminal device, the third terminal device performs transmission on the first resource in the COT preempted by the first terminal device, unless a special case occurs. Therefore, whether the third terminal device performs transmission on the first resource is usually understood as: The third terminal device performs transmission on the first resource.

It should be understood that whether there is a HARQ feedback corresponding to transmission performed by the third terminal device on the first resource is whether there is a response from a peer end (for example, the first terminal device or another UE) of the third terminal device for the transmission performed by the third terminal device on the first resource.

It should be further understood that the result of the HARQ feedback corresponding to transmission performed by the third terminal device on the first resource is an ACK or a NACK, and indicates that the transmission performed by the third terminal device on the first resource succeeds or fails.

By way of example but not limitation, when determining that the third terminal device does not perform transmission on the first resource, the first terminal device may further access the channel in time and occupy the first resource, to avoid COT interruption caused by preemption of the first resource by another UE because the first resource is not occupied after 25 µs. This is not conducive to improvement of system transmission performance.

Optionally, when listening to a transmission status of the at least one second terminal device (including the third terminal device) in the COT, the first terminal device may report the transmission status of the at least one second terminal device to the network device, so that the network device performs targeted scheduling subsequently, and appropriately allocates and uses the resource. To be specific, the method further includes step S405 after step S402 and/or step S404.

S405: The first terminal device sends information #3 (namely, an example of third information) to the network device.

Correspondingly, the network device receives the information #3 from the first terminal device.

Optionally, the network device may determine a to-be-scheduled resource based on the information #3.

The information #3 indicates one or more of the following: the transmission status of the at least one second terminal device; the transmission status of the third terminal device; a fourth terminal device that does not perform feedback, where the fourth terminal device is included in the at least one second terminal device; a fifth terminal device that does not perform transmission on the first resource; a sixth terminal device that fails to perform transmission on the first resource; or a seventh terminal device that successfully performs transmission on the first resource.

It should be noted that the fifth terminal device, the sixth terminal device, and the seventh terminal device are included in the third terminal device.

The transmission status of the at least one second terminal device includes: a transmission status of a terminal device participating in COT-sharing (for example, the transmission status of the third terminal device (including whether the transmission is performed on the allocated COT resource, whether there is the HARQ feedback from the peer end for the transmission, and whether the result of the HARQ feedback is a success or a failure), the fifth terminal device that does not perform transmission on the first resource, the sixth terminal device that fails to perform transmission on the first resource, and the seventh terminal device that successfully performs transmission on the first resource), and a transmission status of a terminal device that does not participate in the COT-sharing, where the terminal device that does not participate in the COT-sharing is the fourth terminal device that does not perform feedback.

For example, the indication information #1 sent by the base station to the UE 1 in step S401 indicates one-bit information on a PUCCH resource corresponding to each of other UEs (for example, a UE 2, a UE 3, a UE 4, and a UE 5). For example, a bit "0" corresponds to an ACK, and indicates that transmission succeeds; and a bit "1" corresponds to a NACK, and indicates that transmission fails. If the UE 2, the UE 3, and the UE 4 perform feedback, the UE 5 does not perform feedback, a HARQ result corresponding to transmission performed by the UE 2 is an ACK, HARQ results corresponding to transmission performed by the UE 3 and the UE 4 are NACKs, and a HARQ result corresponding to the transmission performed by the UE 1 is an ACK, the information #3 fed back by the UE 1 to the base station on a PUCCH resource includes: the ACK carried on a bit corresponding to the UE 1, the ACK carried on a bit corresponding to the UE 2, the NACK carried on a bit corresponding to the UE 3, the NACK carried on a bit corresponding to the UE 4, and a NACK carried on a bit corresponding to the UE 5 (because no feedback is performed). Alternatively, other indication information indicates that the UE 5 does not participate in transmission, and corresponding bit information may be "00111".

Optionally, the information #3 may explicitly or implicitly indicate the transmission status of the at least one second terminal device. For example, identification information of a terminal device (for example, an ID of the UE or an IP address of the UE) may indicate a transmission status of the corresponding terminal device.

It should be noted that the transmission status indicated by the information #3 may include a transmission status of all or a part of the second terminal devices. This is not specifically limited in this application.

In addition, the information #3 further indicates a transmission status of the first terminal device, for example, whether the COT preempted by the first terminal device is shared with the at least one second terminal device; and a transmission status of the first terminal device on the COT resource, including whether there is a HARQ feedback from a peer end for the transmission performed by the first terminal device, whether a result of the HARQ feedback is a success or a failure, and the like.

Optionally, if step S420 does not occur, in other words, the UE 1 does not receive a feedback from any other UE, when providing a PUCCH reply to the base station, the UE 1 reports only a transmission result of the UE 1, for example, a HARQ result (an ACK or a NACK) fed back by a UE on an Rx side of the UE 1 (namely, a peer UE of the UE 1). In addition, the UE 1 may further notify the gNB that no other UE 2 participates in the COT-sharing. For example, a HARQ result corresponding to the UE 2 may be set to a NACK, or an additional indication information bit is added to the information #3 to indicate that the UE 2 does not participate in the COT-sharing. In this way, after receiving the information #3, the base station identifies that the UE 2 does not perform transmission successfully, and may subsequently re-schedule a resource for the UE 2 to perform transmission.

Optionally, the at least one second terminal device may alternatively separately report the respective transmission status to the network device.

For example, the base station sends a plurality of pieces of DCI to a plurality of LTEs to notify the COT-sharing related information. The plurality of pieces of DCI may be for determining a plurality of PUCCHs, and each PUCCH corresponds to one UE. Assuming that there are three UEs (for example, a UE 1, a UE 2, and a UE 3), the base station sends DCI #11 to the UE 1, where the DCI #11 indicates a PUCCH #11; the base station sends DCI #22 to the UE 2, where the DCI #22 indicates a PUCCH #22; and the base station sends DCI #33 to the UE 3, where the DCI #33 indicates a PUCCH #33. The UE 1 preempts the transmission opportunity through LBT, and may use a preempted COT resource with the UE 2 and the UE 3 through COT-sharing. In this case, the UE 1, the UE 2, and the UE 3 report respective transmission statuses on the COT resource to the base station respectively on the PUCCH #11, the PUCCH #22, and the PUCCH #33.

It should be noted that, a UE (for example, the UE 3) that does not preempt the COT and to which no COT resource is allocated may feed back a NACK to the base station, or send, to the base station, indication information indicating that there is no transmission resource. For a UE (for example, the UE 2) that does not preempt the COT but to which a resource is allocated through COT-sharing, although a position of a transmission resource may be different from the PUCCH #22 indicated by the DCI #22 sent to the UE 2, a HARQ feedback is determined based on a transmission result, namely, a HARQ.

Further, the UE may determine a COT-sharing resource range (namely, a time domain range and/or a frequency domain range) based on a position of the PUCCH resource indicated by the DCI. In the resource range, if there is the transmission opportunity and an ACK is fed back for transmission, the UE includes the ACK in the PUCCH to be sent to the gNB. Alternatively, in the resource range, if there is the transmission opportunity and a NACK is fed back for transmission, the UE includes the NACK in the PUCCH to be sent to the gNB.

According to the solution provided in this application, the first terminal device is a terminal device that successfully preempts the COT. A feedback mechanism between UEs (to be specific, between the first terminal device and the at least one second terminal device) is introduced, so that the first terminal device allocates the resource in the preempted COT to the third terminal device that has performed feedback. This can reduce the resource waste, and even avoid the COT interruption, to improve the system transmission performance and ensure a system throughput.

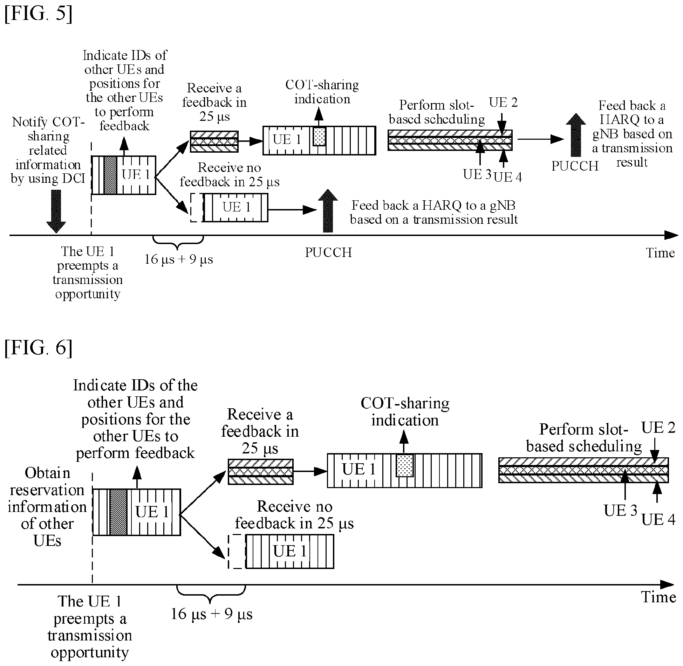

FIG. 5 is a diagram of COT resource allocation applied to a mode 1 scenario and a mode 2 scenario according to an embodiment of this application. As shown in FIG. 5, a base station sends DCI to a UE 1 to notify the UE 1 of COT-sharing related information, for example, time-frequency domain position information of a COT resource. The UE 1 preempts the COT through LBT, sends IDs of other UEs (for example, a UE 2, a UE 3, a UE 4, and a UE 5), and indicates the other UEs to feed back, in a type 2B, whether a message of the UE 1 is detected.

In an example, the UE 1 receives feedback messages of other UEs in 9 µs from the 16^{th} microsecond to the 25^{th} microsecond. For example, the UE 2, the UE 3, and the UE 4 perform feedback in the 9 µs, and it indicates that the UE 2, the UE 3, and the UE 4 detect the message sent by the UE 1. The UE 5 does not perform feedback in the 9 µs, and it indicates that the UE 5 cannot detect the message sent by the UE 1. The UE 1 updates the COT-sharing related information based on the feedback messages of the other UEs, and sends updated COT-sharing related information to the UE 2, the UE 3, and the UE 4 for the UE 2, the UE 3, and the UE 4 to perform transmission on allocated resources, for example, to perform slot-based access. For example, the UE 2, the UE 3, and the UE 4 perform transmission on different subchannels in a same slot. Further, the UE 1 may listen to transmission statuses of the UE 2, the UE 3, and the UE 4 on the respective allocated resources, and report the transmission statuses of the other UEs to the base station through a PUCCH resource. For example, the base station is notified of one or more of the following: the UE 5 does not participate in COT-sharing, the UE 2, the UE 3, and the UE 4 participate in the COT-sharing, whether the UE 2, the UE 3, and the UE 4 perform transmission on the respective allocated resources, whether there are HARQ feedbacks corresponding to transmission performed by the UE2, the UE3, and the UE 4, or whether results of HARQ feedbacks corresponding to transmission performed by the UE2, the UE3, and the UE 4 are ACKs or NACKs.

In another example, the UE 1 does not receive feedback messages of the other UEs in 9 µs from the 16^{th} microsecond to the 25^{th} microsecond, in other words, none of the UE 2, the UE 3, the UE 4, and the UE 5 performs feedback. In this case, the UE 1 may occupy the COT resource in a type 2A and continue to perform transmission, to avoid COT interruption. Further, the UE 1 reports transmission statuses of the other UEs to the base station through a PUCCH resource. For example, the base station is notified of one or more of the following: none of the UE 2, the UE 3, the UE 4, and the UE 5 participates in COT-sharing, whether there is a HARQ feedback corresponding to transmission performed by the UE 1, or whether a result of a HARQ feedback corresponding to transmission performed by the UE 1 is an ACK or a NACK.

It should be noted that a feedback mechanism shown in steps S410, S420, and S430 in the method 400 may be separately performed, and other steps such as S401, S405, and S406 are not performed. Another UE may not be capable of receiving the COT-sharing information of the UE 1 due to half-duplex, a bidirectional channel difference, or another factor, and whether the another UE can detect the message of the UE 1 may be further determined by using the feedback mechanism, to determine whether the COT resource of the UE 1 can be shared.

FIG. 6 is a diagram of COT resource allocation applied to a mode 2 scenario according to an embodiment of this application. As shown in FIG. 6, a UE 1 may obtain reservation messages of other UEs through receiving, listening, sensing, or the like. For example, the UE 1 obtains sidelink control information SCI by demodulating the messages of the other UEs, to obtain information about resources reserved for the other UEs. Then, the UE 1 preempts a COT through LBT, sends IDs of the other UEs (for example, a UE 2, a UE 3, a UE 4, and a UE 5), and indicates the other UEs to feed back, in a type 2B, whether a message of the UE 1 is detected.

In an example, the UE 1 receives feedback messages of other UEs in 9 µs from the 16^{th} microsecond to the 25^{th} microsecond. For example, the UE 2, the UE 3, and the UE 4 perform feedback in the 9 µs, and it indicates that the UE 2, the UE 3, and the UE 4 detect the message sent by the UE 1. The UE 5 does not perform feedback in the 9 µs, and it indicates that the UE 5 cannot detect the message sent by the UE 1. The UE 1 updates COT-sharing related information based on the feedback messages of the other UEs, and sends updated COT-sharing related information to the UE 2, the UE 3, and the UE 4 for the UE 2, the UE 3, and the UE 4 to perform transmission on allocated resources, for example, to perform slot-based access. Optionally, the UE 1, the UE 2, the UE 3, and the UE 4 may perform transmission on different subchannels in a same slot.

In another example, the UE 1 does not receive feedback messages of the other UEs in 9 µs from the 16^{th} microsecond to the 25^{th} microsecond, in other words, none of the UE 2, the UE 3, the UE 4, and the UE 5 performs feedback. In this case, if the UE 1 needs to perform data transmission, the UE 1 may occupy the COT resource in a type 2A and continue to perform transmission, to avoid COT interruption. If the UE 1 does not need to perform data transmission, the UE 1 may quit the transmission; or the UE1 may still occupy transmission on a channel in a type 2A until a peer end of the UE 1 sends a HARQ result.

According to the foregoing solution, resource allocation to another UE that cannot detect the COT-sharing information is avoided by using the feedback detection mechanism. In other words, this manner can resolve a problem that the UE 2 cannot detect transmission when the UE 1 shares the COT-sharing in the mode 1 scenario and/or the mode 2 scenario, and provides a solution of how to feed back a COT-sharing status to the base station in the mode 1 scenario for the base station to use during subsequent mode 1 scheduling. In addition, the UE 1 reports the transmission status of the another UE to the base station, so that overheads for additionally indicating the another UE to perform feedback can be avoided, and feedback resources can be saved.

The following describes an example of how the UE 1 notifies the gNB of the transmission status of the another UE that uses the COT resource of the UE 1 and how to ensure that the COT-sharing related information sent by the UE 1 can be received by the another UE in a mode 1 scenario.

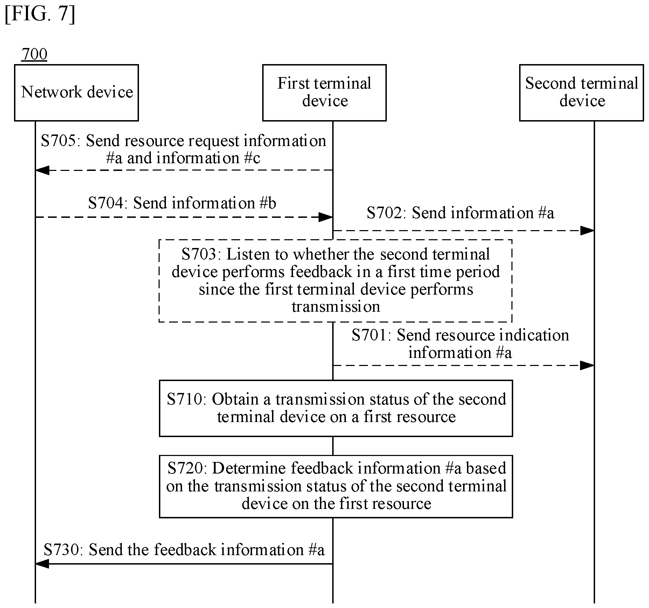

FIG. 7 is a schematic flowchart of a second communication method 700 according to an embodiment of this application. A difference from the foregoing method 400 lies in that resource allocation in COT-sharing in this implementation is determined completely based on an indication of a network device. In this implementation, a UE 1 determines a transmission status of the UE 2 based on a feedback received from the UE 2 or through autonomous listening. It should be understood that this implementation is mainly applicable to a mode 1 scenario. As shown in FIG. 7, the method includes the following plurality of steps.

S710: The first terminal device obtains a transmission status of the second terminal device on a first resource.

The first resource is included in a COT preempted by the first terminal device, and the first resource includes a time domain resource and/or a frequency domain resource.

It should be noted that a quantity of second terminal devices is not specifically limited in this application.

It should be further noted that the first terminal device preempts a channel use opportunity, namely, the COT resource, in a type 1 in an LBT procedure.

In a possible implementation, that the first terminal device obtains a transmission status of the second terminal device on a first resource includes: The first terminal device receives a feedback message from the second terminal device. The first terminal device determines the transmission status of the second terminal device on the first resource based on the feedback message.

It should be noted that the transmission status determined based on the feedback message herein is whether the second terminal device performs transmission on the first resource. For example, if the second terminal device performs feedback in the 16^{th} microsecond to the 25^{th} microsecond, the first terminal device may determine, based on the feedback of the second terminal device, that the second terminal device occupies the first resource.

In another possible implementation, that the first terminal device obtains a transmission status of the second terminal device on a first resource includes: The first terminal device listens to the transmission status of the second terminal device on the first resource.

For example, the first terminal device may listen to, through energy detection or by detecting a value of SCI, whether the second terminal device occupies a resource of a frequency band and/or PSFCH reply (for example, an ACK or a NACK) information of the second terminal device. A specific implementation in which the first terminal device listens to a channel resource is not specifically limited in this application.

For example, the transmission status of the second terminal device on the first resource includes one or more of the following: whether the second terminal device performs transmission on the first resource; whether there is a HARQ feedback corresponding to transmission performed by the second terminal device on the first resource; or a result of a HARQ feedback corresponding to transmission performed by the second terminal device on the first resource.

It should be noted that, for a specific implementation in which the first terminal device listens to the transmission status of the second terminal device on the first resource and a specific description of the transmission status of the second terminal device on the first resource, refer to step S404 in the method 400. For brevity, details are not described herein again.

Optionally, before obtaining the transmission status of the second terminal device on the first resource, the first terminal device may use the first resource in the preempted COT with the second terminal device for the second terminal device to perform transmission. To be specific, the method further includes step S701 before step S710:
S701: The first terminal device sends resource indication information #a (namely, an example of first resource indication information).

Correspondingly, the second terminal device receives the resource indication information #a from the first terminal device.

The resource indication information #a indicates the first resource occupied by the second terminal device for transmission. The first resource is included in the channel occupancy time COT preempted by the first terminal device, and includes the frequency domain resource and/or the time domain resource.

Optionally, in this implementation, it may be considered that the first resource is determined by the network device, to be specific, the network device determines the first resource based on the COT resource preempted by the first terminal device and a scheduling requirement of the second terminal device. The first terminal device may directly notify the second terminal device of the allocated first resource for the second terminal device to perform transmission.

Optionally, the base station or the first terminal device may indicate that the first resource is for the second terminal device to perform transmission. This is not specifically limited in this application.

It should be noted that a meaning, specific carried content, a sending manner, and the like of the resource indication information #a are similar to those of the resource indication information #1 in step S430 in the foregoing method 400. For brevity, details are not described herein again.

Optionally, before sending the resource indication information #a, the first terminal device generates the resource indication information #a based on the feedback of the second terminal device.

For example, the COT preempted by the first terminal device includes a frequency domain resource #1 to a frequency domain resource #5 and a time domain resource #1 to a time domain resource #3. The first terminal device may determine, based on a quantity (for example, 2) of UEs 2 that have performed feedback and a demanded data transmission amount, to allocate the time domain resource #1 and the frequency domain resource #1 to the frequency domain resource #3 to the 1^{st} UE 2, and allocate the time domain resource #2 and the frequency domain resource #4 to the 2^{nd} UE 2.

A specific implementation in which the first terminal device generates the resource indication information is not specifically limited in this application.

Optionally, before allocating the first resource to the second terminal device, the first terminal device may first notify the second terminal device to perform feedback, to ensure that the first terminal device and the second terminal device can detect a message of each other, to avoid a waste of the allocated first resource. To be specific, the method further includes steps S702 and S703 before step S701:
S702: The first terminal device sends information #a (namely, an example of first information) to the second terminal device.

Correspondingly, the second terminal device receives the information #a from the first terminal device.

The information #a indicates the second terminal device to perform feedback.

Optionally, if the first terminal device receives the feedback from the second terminal device, and it indicates that the first terminal device and the second terminal device can detect the message of each other. For a specific implementation, refer to step S420 in the method 400. For brevity, details are not described herein again.

It should be understood that, in this implementation, it may be considered that the first resource is determined by the first terminal device. To be specific, the first terminal device may determine, based on feedbacks, specific second terminal devices that can detect a message sent by the first terminal device, and then allocate the preempted COT resource to these second terminal devices, to avoid a resource waste that is caused because the second terminal device does not use the allocated resource.

It should be noted that a meaning, specific carried content, a sending manner, and the like of the information #a are similar to those of the information #1 in step S410 in the foregoing method 400. For example, the information #a may be a broadcast message, may indicate a resource position for the second terminal device to perform feedback, and may indicate the second terminal device to perform feedback in the COT in a first mode. For brevity, details are not described herein again.

S703: The first terminal device listens to whether the second terminal device performs feedback in a first time period since the first terminal device performs transmission.

A start moment of the first time period is determined based on the first mode. It should be noted that the first terminal device performs transmission by segments. When the first terminal device sends the information #a, it indicates that the 1^{st} segment of transmission has been completed by the first terminal device. In this case, the first terminal device may still have to-be-communicated data, or may have completed the transmission during the 1^{st} segment of transmission. This is not specifically limited in this application. Optionally, in the 2^{nd} segment of transmission performed by the first terminal device, the to-be-communicated data and updated COT-sharing information may continue to be communicated, or an empty data packet may be sent to avoid COT resource interruption or the like.

Optionally, the first mode may be a type 2A or a type 2B in a current standard. This is not specifically limited in this application.

In a possible implementation, the first terminal device listens to (for example, in the 16^{th} microsecond to the 25^{th} microsecond) whether a channel is occupied, to determine whether the second terminal device performs transmission on the first resource. For example, if the first terminal device finds through the listening in the 16^{th} microsecond to the 25^{th} microsecond that the second terminal device does not perform transmission, the first terminal device may occupy the first resource for data transmission after 25 µs, to avoid a COT resource waste, the COT interruption, or the like.

It should be noted that, for specific listening content and a listening manner of the first terminal device, refer to step S402 in the foregoing method 400. For brevity, details are not described herein again.

Optionally, when the network device determines that the first terminal device preempts the COT resource and the second terminal device has the scheduling requirement, the network device may indicate the first terminal device to share the preempted COT resource with the second terminal device for transmission. To be specific, the method further includes step S704 before step S702:
S704: The network device sends information #b to the first terminal device.

Correspondingly, the first terminal device receives the information #b from the network device.

The information #b is for determining to allocate, to the second terminal device, the first resource in the COT preempted by the first terminal device, and the information #b includes identification information of the second terminal device, for example, an ID of at least one UE 2.

For example, assuming that there are two second terminal devices, when determining that the first terminal device preempts the COT resource in the LBT procedure, the network device may indicate the first terminal device to allocate a resource #1 (for example, a transmission resource occupying the 1^{st} to 10^{th} slots) in the COT resource to the 1^{st} UE 2, and allocate a resource #2 (for example, a transmission resource occupying the 11^{th} to the 15^{th} slots) in the COT resource of the first terminal device to the 2^{nd} UE 2. The first terminal device sends the first resource to the second terminal device based on the indication of the network device, where the first resource is for the second terminal device to perform transmission.

Optionally, the information #b may further include information such as a demanded data amount of the second terminal device. For example, the network device may determine, based on a UE 2 having a largest demanded data amount, a time domain resource (for example, a quantity of slots or a quantity of milliseconds) and/or a frequency domain resource (for example, a quantity of subchannels, a quantity of RBs, or a quantity of interlaces) that are/is to be occupied.

Optionally, the network device receives a scheduling request message from the second terminal device, so that the network device collects a UE 2 having a transmission requirement. The scheduling request message may include information such as the ID of the UE 2 or an ID of a peer UE communicating with the UE 2.

It should be noted that a meaning, specific carried content, a sending manner, and the like of the information #b are similar to those of the information #2 in step S401 in the foregoing method 400. For example, the information #b may include the demanded data amount of the second terminal device and the like. For brevity, details are not described herein again.

Optionally, before the network device indicates the first terminal device to share the COT resource with the second terminal device, the first terminal device may actively report resource request information #a and information #c for consideration by the network device during COT-sharing resource allocation, to avoid a problem that UEs cannot detect each other. To be specific, the method further includes step S705 before step S704:
S705: The first terminal device sends the resource request information #a (namely, an example of resource request information) and the information #c (namely, an example of third information) to the network device.

Correspondingly, the network device receives the resource request information #a and the information #c from the first terminal device.

The resource request information #a is for requesting a resource for the first terminal device to perform transmission, and the information #c includes one or more of the following: identification information of another terminal device detected by the first terminal device through listening, where the another terminal device includes the second terminal device; location information of the first terminal device; or identification information of the first terminal device.

For example, when reporting a BSR to the base station, the first terminal device may include the location information of the first terminal device, or include a source ID and a destination ID.

It should be noted that a meaning, a purpose, a sending manner, and the like of the resource request information #a are similar to those of the resource request information #1 in step S406 in the foregoing method 400. A meaning, specific carried content, a sending manner, and the like of the information #c are similar to those of the information #4 in step S406 in the foregoing method 400. For brevity, details are not described herein again.

Further, the first terminal device may determine and report feedback information to the network device based on the obtained transmission status of the second terminal device on the allocated resource. To be specific, the method further includes steps S720 and S730 after step S710.

S720: The first terminal device determines feedback information #a (namely, an example of first feedback information) based on the transmission status of the second terminal device on the first resource.

For example, the feedback information #a indicates one or more of the following: a third terminal device that does not perform transmission on the first resource; a fourth terminal device that fails to perform transmission on the first resource; a fifth terminal device that successfully performs transmission on the first resource; or a sixth terminal device that does not perform feedback, where the third terminal device, the fourth terminal device, the fifth terminal device, and the sixth terminal device are included in the second terminal device.

Optionally, the feedback information #a may explicitly or implicitly indicate the transmission status of the second terminal device. For example, a transmission status of a corresponding terminal device on the first resource may be indicated by an ID of the UE or an IP address of the UE.

It should be noted that the transmission status indicated by the feedback information #a may include a transmission status of all or a part of the second terminal devices. This is not specifically limited in this application.

S730: The first terminal device sends the feedback information #a to the network device.

Correspondingly, the network device receives the feedback information #a from the first terminal device.

Optionally, the network device may determine a to-be-scheduled resource based on the feedback information #a.

For example, the first terminal device feeds back the transmission status of the second terminal device through a PUCCH resource indicated by the network device.

It should be noted that the first terminal device may further send feedback information #b to the network device. The feedback information #b indicates a transmission status of the first terminal device, for example, whether the COT preempted by the first terminal device is shared with the second terminal device; and a transmission status of the first terminal device on the COT resource, including whether there is a HARQ feedback from a peer end for the transmission performed by the first terminal device, whether a result of the HARQ feedback is a success or a failure, and the like. Optionally, the feedback information #a and the feedback information #b may be sent on a same channel, or may be sent on different channels. This is not specifically limited in this application.

According to the solution provided in this application, the first terminal device is a terminal device that successfully preempts the COT, and the first terminal device feeds back the transmission status of the second terminal device on the resource in the COT to the network device, to resolve a current problem that the network device cannot obtain a transmission status of another UE. The network device may subsequently schedule the resource in a targeted manner based on the transmission status of the part or all of the second terminal devices that is reported by the first terminal device, to avoid the resource waste, help meet the transmission requirement of the terminal device, and improve transmission performance and a system throughput of a communication system.

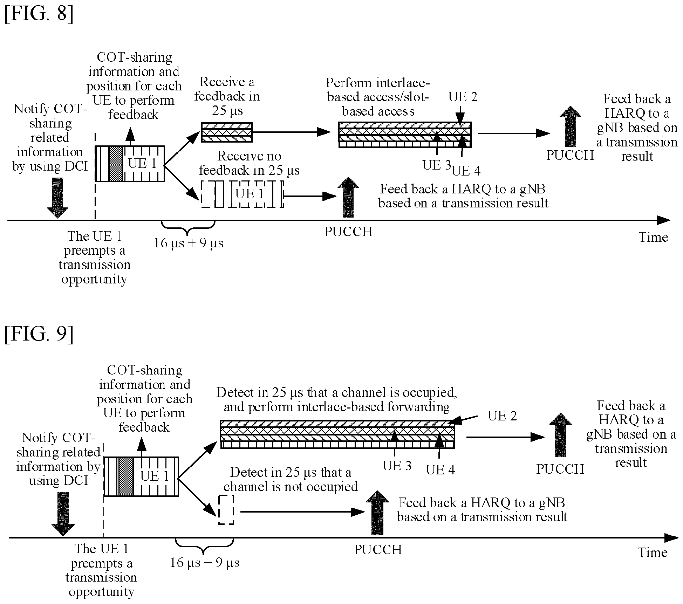

FIG. 8 is a diagram of feeding back a transmission status on a COT resource to a UE 1 by another UE according to an embodiment of this application. As shown in FIG. 8, the UE 1 may determine, based on information fed back by another UE that can detect a message of the UE 1, a UE that participates in COT-sharing. For example, a base station sends DCI to the UE 1 to notify the UE 1 of COT-sharing related information, for example, time-frequency domain position information of the COT resource. The UE 1 preempts the COT through LBT, sends transmission resources to other UEs (for example, a UE 2, a UE 3, a UE 4, and a UE 5), and indicates the other UEs to feed back, in a type 2B, whether the message of the UE 1 is detected. It should be understood that the transmission resources allocated to the other UEs are indicated by the base station by using the DCI.

In an example, the UE 1 receives feedback messages of other UEs in 9 µs from the 16^{th} microsecond to the 25^{th} microsecond. For example, the UE 2, the UE 3, and the UE 4 perform feedback in the 9 µs, and it indicates that the UE 2, the UE 3, and the UE 4 detect the message sent by the UE 1. The UE 5 does not perform feedback in the 9 µs, and it indicates that the UE 5 cannot detect the message sent by the UE 1. The UE 2, the UE 3, and the UE 4 perform transmission on the COT resource that is preempted by the UE 1 and that is indicated by the base station, for example, perform slot-based or interlace-based access. For example, the UE 2, the UE 3, and the UE 4 perform transmission on different subchannels in a same slot. Optionally, the UE 1 may simultaneously perform transmission with the UE 2, the UE 3, and the UE 4 on the COT resource, listen to transmission statuses of the UE 2, the UE 3, and the UE 4, and report the transmission statuses of the UE 2, the UE 3, and the UE 4 to the base station through a PUCCH resource.

In another example, the UE 1 does not receive feedback messages of the other UEs in 9 µs from the 16^{th} microsecond to the 25^{th} microsecond, in other words, none of the UE 2, the UE 3, the UE 4, and the UE 5 performs feedback. In this case, the UE 1 may occupy the COT resource in a type 2A and continue to perform transmission or not perform transmission, to avoid COT interruption. Further, the UE 1 reports transmission statuses of the other UEs to the base station through a PUCCH resource.

According to the foregoing solution, COT-sharing information is determined based on the resource allocated by the base station, and the UE 1 receives the feedback (for example, whether a channel is accessed in 9 µs) from the another UE, so that a problem that UEs cannot detect each other during the COT-sharing between the UEs is resolved, and a transmission status of the another UE carried on the PUCCH fed back to the base station is determined.

FIG. 9 is a diagram of listening, by a UE 1, a transmission status of another UE on a COT resource according to an embodiment of this application. As shown in FIG. 9, the UE 1 may determine, by listening to usage of a COT-sharing resource, whether the another UE occupies a resource of a frequency band, and feed back, to a base station, an identifier of a UE that participates in and/or does not participate in COT-sharing. For example, the base station sends DCI to the UE 1 to notify the UE 1 of COT-sharing related information, for example, time-frequency domain position information of the COT resource. The UE 1 preempts the COT through LBT, and sends transmission resources to other UEs (for example, a UE 2, a UE 3, a UE 4, and a UE 5). It should be understood that the transmission resources allocated to the other UEs are indicated by the base station by using the DCI.

In an example, the UE 1 detects, in 9 µs from the 16^{th} microsecond to the 25^{th} microsecond, that a channel is occupied. This indicates that the UE 2, the UE 3, and the UE 4 perform transmission on the COT resource that is preempted by the UE 1 and indicated by the base station. For example, the UE 2, the UE 3, and the UE 4 perform transmission on different subchannels in a same slot. Further, the UE 1 may listen to transmission statuses of the UE 2, the UE 3, and the UE 4 on respective allocated resources, and report the transmission statuses of the other UEs to the base station through a PUCCH resource.

In another example, the UE 1 does not detect, in 9 µs from the 16^{th} microsecond to the 25^{th} microsecond, that a channel is occupied. This indicates that the UE 2, the UE 3, and the UE 4 do not perform transmission on the COT resource that is preempted by the UE 1 and indicated by the base station. In this case, the UE 1 may occupy the COT resource in a type 2A and continue to perform transmission or not perform transmission, provided that the COT is not interrupted. Further, the UE 1 reports transmission statuses of the other UEs to the base station through a PUCCH resource.

It should be noted that, in this implementation, there is no feedback mechanism, and information carried on the PUCCH fed back to the base station is determined only based on the transmission status of the another UE. In other words, the COT-sharing is only transmission between other UEs, and does not include transmission performed by the UE 1.

According to the foregoing solution, COT-sharing information is determined based on the resource allocated by the base station, and the UE 1 listens to the transmission status (for example, whether transmission is performed on the resource allocated by the base station, whether there is a HARQ feedback corresponding to the transmission, and whether a result of the HARQ feedback is an ACK or a NACK) of the another UE, and determines the transmission status of the another UE carried on the PUCCH fed back to the base station.

Next, a solution of how to avoid interruption of a specific slot in the COT when another UE incorrectly detects or misses detecting the COT-sharing information of the UE 1 in the mode 2 scenario is described by using an example.

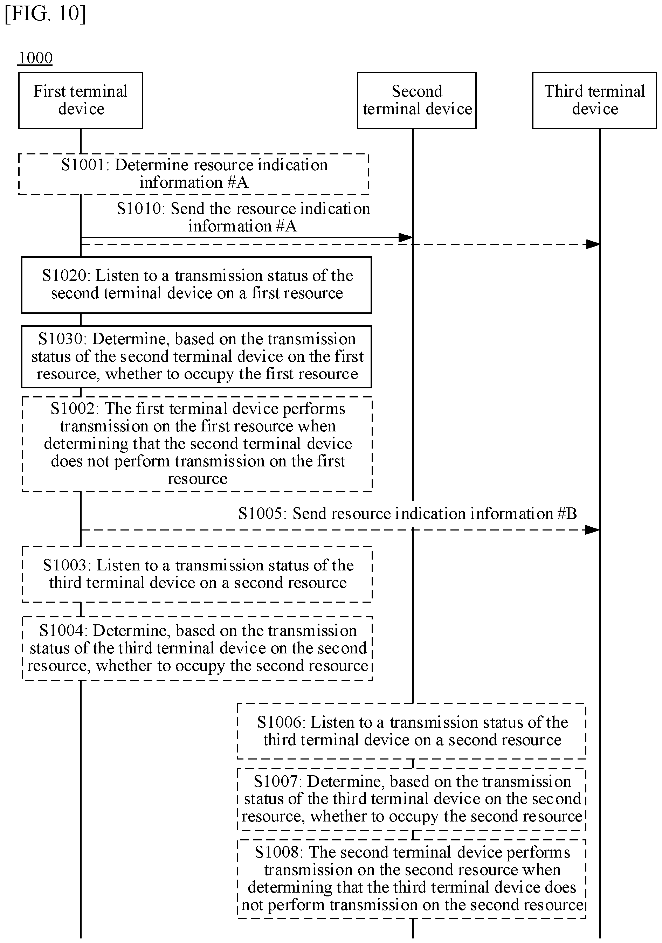

FIG. 10 is a schematic flowchart of a third communication method 1000 according to an embodiment of this application. A difference from the foregoing method 400 or 700 lies in that this implementation involves no feedback mechanism, and a UE 1 mainly allocates a COT resource to another UE and listens to a transmission status of the another UE to determine whether to preempt a channel, to avoid COT interruption. As shown in FIG. 10, the method includes the following plurality of steps.

S1010: The first terminal device sends resource indication information #A (namely, an example of first resource indication information) to a second terminal device.

Correspondingly, the second terminal device receives the resource indication information #A from the first terminal device.

The resource indication information #A indicates a first resource occupied by the second terminal device for transmission, the first resource is included in the COT preempted by the first terminal device, and the first resource includes a time domain resource and/or a frequency domain resource.

It should be noted that a meaning, specific carried content, a sending manner, and the like of the resource indication information #A are similar to those of the resource indication information #a in step S701 in the foregoing method 700. For example, the resource indication information #A may be a broadcast message, information #A may indicate a resource position for the second terminal device to perform feedback, and the resource indication information #A may indicate the second terminal device to perform feedback in the COT in a first mode. For brevity, details are not described herein again.

Optionally, the resource indication information #A further indicates a second resource occupied by a third terminal device for transmission, to be specific, the first terminal device sends the resource indication information #A to the third terminal device, where the second resource is included in the COT preempted by the first terminal device, the second resource includes a time domain resource and/or a frequency domain resource, and a time domain in which the second resource is located is after a time domain in which the first resource is located.

In other words, in a mode 2 scenario, the first terminal device may determine, based on reservation information of other UEs, that the second terminal device and the third terminal device have a transmission requirement. Correspondingly, the first terminal device may allocate transmission resources, namely, the first resource and the second resource, to both the second terminal device and the third terminal device by using the resource indication information #A. For example, a transmission position of the first resource is before that of the second resource.

It should be noted that after determining the first resource based on the resource indication information #A, the second terminal device may not perform transmission due to some reasons. This case is not excluded from this application.

Optionally, before sending the resource indication information #A to the second terminal device, the first terminal device may generate the resource indication information #A. To be specific, the method further includes step S1001 before step S1010:
S1001: The first terminal device determines the resource indication information #A.

For example, the first terminal device senses a channel resource or determines the transmission requirement of the second terminal device based on the reservation information of the other UEs, and allocates, to the second terminal device, the first resource (for example, a first time period starting from the 1^{st} slot) in the COT resource preempted by the first terminal device. Optionally, the first resource may be greater than a resource needed for the second terminal device to perform transmission; or the first resource may be less than a resource needed for the second terminal device to perform transmission, and a remaining resource that is needed is shared with the second terminal device or the like next time. This is not specifically limited in this application.

Further, after sharing the first resource in the COT resource with the second terminal device, the first terminal device may listen to a transmission status of the second terminal device, to determine whether the first terminal device needs to occupy the first resource, and determine information to be fed back to a network device. To be specific, the method further includes S1020, S1030, and S1002 after step S1010.

S1020: The first terminal device listens to the transmission status of the second terminal device on the first resource.

For example, the first terminal device may listen to, through energy detection, whether the second terminal device occupies a resource of a frequency band. For example, the energy detection may be understood as that the first terminal device detects energy in 9 µs (namely, from the 16^{th} microsecond to the 25^{th} microsecond). If the energy exceeds a threshold, it indicates that the second terminal device occupies the resource. If the energy does not exceed a threshold, it indicates that the second terminal device does not occupy the resource. In this case, the first terminal device may occupy the first resource.

S1030: The first terminal device determines, based on the transmission status of the second terminal device on the first resource, whether to occupy the first resource.

Optionally, in S1002, the first terminal device performs transmission on the first resource when determining that the second terminal device does not perform transmission on the first resource.

It should be understood that the description herein is specific to a case in which there is one second terminal device, to be specific, after allocating the first resource to the second terminal device, the first terminal device determines, through listening (for example, in the 16^{th} microsecond to the 25^{th} microsecond), whether the second terminal device performs transmission on the first resource.

For example, if the first terminal device finds through the listening in the 16^{th} microsecond to the 25^{th} microsecond that the second terminal device does not perform transmission, it may be considered that the second terminal device does not detect a message sent by the first terminal device for the second terminal device. Therefore, the first terminal device may continue to occupy the first resource after 25 µs to perform transmission, to avoid a COT resource waste, COT interruption, or the like.

Optionally, after performing transmission on the first resource, the first terminal device may re-send resource indication information to the third terminal device, where the resource indication information indicates a resource for the third terminal device to perform transmission. To be specific, the method further includes step S1005 after step S1002.

S1005: The first terminal device sends resource indication information #B (namely, an example of second resource indication information) to the third terminal device, where the resource indication information #B indicates a second resource, the second resource is for the third terminal device to perform transmission, the second resource is included in the COT preempted by the first terminal device, the second resource includes a time domain resource and/or a frequency domain resource, and a time domain in which the second resource is located is after the time domain in which the first resource is located.

It should be understood that the sending of the resource indication information #B is an optional step, to be specific, the resource indication information #A already indicates the second resource for the third terminal device to perform transmission, and this implementation may be considered as: The first resource is not occupied by the second terminal device, and the first terminal device accesses a channel after 25 µs to perform data transmission, and re-sends the second resource indication information to the third terminal device, where the second resource indicated by the resource indication information #B is the same as the second resource indicated by the first resource indication information.

By way of example but not limitation, another UE, for example, a UE 2, may alternatively send the resource indication information #B to the third terminal device. In this implementation, the second terminal device uses the first resource and performs data transmission on the first resource. After the transmission ends, the second terminal device listens to whether the third terminal device performs access in the 16^{th} microsecond to the 25^{th} microsecond. If the second terminal device determines that the third terminal device performs access in the 16^{th} microsecond to the 25^{th} microsecond, the second terminal device may or may not send the resource indication information #B. It indicates that the third terminal device is to perform transmission on the allocated second resource subsequently. If the second terminal device determines that the third terminal device does not perform access in the 16^{th} microsecond to the 25^{th} microsecond, the second terminal device may occupy the second resource, to avoid the COT interruption.

Optionally, after sharing the second resource in the COT resource with the third terminal device, the first terminal device may listen to a transmission status of the third terminal device, to determine whether the first terminal device needs to occupy the second resource, and determine information to be fed back to the network device. To be specific, the method further includes S1003 and S1004 after step S1005.

S1003: The first terminal device listens to the transmission status of the third terminal device on the second resource.

S1004: The first terminal device determines, based on the transmission status of the third terminal device on the second resource, whether to occupy the second resource.

For example, the first terminal device may listen to, through energy detection, whether the third terminal device occupies a resource of the frequency band. For example, the energy detection may be understood as that the first terminal device detects energy in 9 µs (namely, from the 16^{th} microsecond to the 25^{th} microsecond). If the energy exceeds the threshold, it indicates that the third terminal device occupies the resource. If the energy does not exceed the threshold, it indicates that the third terminal device does not occupy the resource. In this case, the first terminal device may occupy the second resource.

It should be noted that, an example in which the UE 1 that starts the COT continuously monitors slot occupancy, namely, the transmission statuses of the UE 2 and the UE 3 on the allocated resources, is described in steps S1003 and S1004. Optionally, in this manner, a UE that occupies a previous slot may alternatively continuously monitor the slot occupancy.

Optionally, for the transmission status of the third terminal device, the UE 2 that occupies the previous slot may alternatively continuously monitor the slot occupancy. In other words, a UE performing transmission in a previous slot in a same COT listens to a transmission status in a next slot, to ensure that the COT is not interrupted. To be specific, the UE 1 listens to the UE 2 after performing transmission, and the UE 2 listens to the UE 3 after performing transmission. It should be understood that a prerequisite of this implementation is that the first terminal device preempts the COT resource and the second terminal device occupies the first resource allocated by the first terminal device and performs transmission on the first resource. Further, the second terminal device may listen to the transmission status of the third terminal device on the second resource, to determine whether to occupy the second resource. To be specific, the method further includes steps S1006 to S1008.

S1006: When it is determined that the second terminal device performs transmission on the first resource, the second terminal device listens to the transmission status of the third terminal device on the second resource.

For example, the second terminal device may listen to, through energy detection, whether the third terminal device occupies a resource of the frequency band. For example, the energy detection may be understood as that the second terminal device detects energy in 9 µs (namely, from the 16^{th} microsecond to the 25^{th} microsecond). If the energy exceeds the threshold, it indicates that the third terminal device occupies the resource. If the energy does not exceed the threshold, it indicates that the third terminal device does not occupy the resource. In this case, the second terminal device may occupy the second resource.

S1007: The second terminal device determines, based on the transmission status of the third terminal device on the second resource, whether to occupy the second resource.

S1008: The second terminal device performs transmission on the second resource when determining that the third terminal device does not perform transmission on the second resource.

It should be understood that the description herein is specific to a case in which there is one third terminal device, to be specific, after the first terminal device allocates the second resource to the third terminal device, the second terminal device determines, through listening (for example, in the 16^{th} microsecond to the 25^{th} microsecond), whether the third terminal device performs transmission on the second resource.

For example, if the second terminal device finds through the listening in the 16^{th} microsecond to the 25^{th} microsecond that the third terminal device does not perform transmission, it may be considered that the third terminal device does not detect a message sent by the first terminal device for the third terminal device. Therefore, the second terminal device may continue to occupy the second resource after 25 µs to perform transmission, to avoid the COT resource waste, the COT interruption, or the like.

According to the solution provided in this application, when the second terminal device does not perform transmission on the first resource, the first terminal device accesses the channel in time and occupies the first resource, to avoid that the first resource is preempted by another UE because the first resource is not occupied after 25 µs. This manner can not only reduce the COT resource waste, but also avoid the COT interruption, to help ensure system transmission performance.

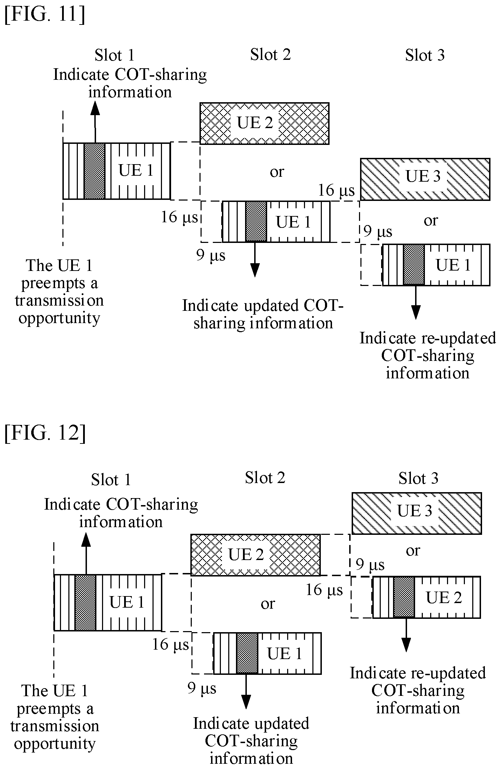

FIG. 11 is a diagram of continuously monitoring slot occupancy by a UE that starts a COT according to an embodiment of this application. As shown in FIG. 11, a UE 1 preempts the COT resource, and completes the 1^{st} segment of transmission in a slot 1. During the 1^{st} segment of transmission, the UE 1 sends COT-sharing information to other UEs (for example, a UE 2 and a UE 3), allocates resources in the COT to the other UEs for transmission (for example, a slot 2 is allocated to the UE 2 for transmission, and a slot 3 is allocated to the UE 3 for transmission), and indicates the other UEs to perform feedback in a type 2B. The UE 1 listens to a transmission status of the UE 2 in the 16^{th} microsecond to the 25^{th} microsecond that are after the 1^{st} segment of transmission. If the UE 2 performs transmission in the slot 2, the UE 1 continues to perform listening. If it is detected in 25 µs that a channel is not occupied, it indicates that the UE 2 does not perform transmission in the slot 2, and the UE 1 continues to occupy the channel (namely, the slot 2) in a type 2A to continue transmission performed by the UE 1, so that another UE cannot preempt the channel through LBT. Optionally, the UE 1 may allocate updated COT-sharing information to the UE 3, where the updated COT-sharing information indicates a resource for the UE 3 to perform transmission. It should be noted that the resource indicated by the updated COT-sharing information sent to the UE 3 is still the slot 3. Further, the UE 1 listens to a transmission status of the UE 3 in the 16^{th} microsecond to the 25^{th} microsecond that are after the 2^{nd} segment of transmission. If the UE 3 performs transmission in the slot 3, it indicates that the UE 3 occupies the allocated resource, and the UE 1 does not need to occupy the slot 3. If it is detected in 25 µs that a channel is not occupied, it indicates that the UE 3 does not perform transmission in the slot 3, and the UE 1 continues to occupy the channel (namely, the slot 3) in the type 2A to continue the transmission performed by the UE 1, so that another UE cannot preempt the channel through LBT.

FIG. 12 is a diagram of continuously monitoring slot occupancy by a UE occupying a previous slot according to an embodiment of this application. As shown in FIG. 12, a UE 1 preempts a COT resource, and completes the 1^{st} segment of transmission in a slot 1. During the 1^{st} segment of transmission, the UE 1 sends COT-sharing information to other UEs (for example, a UE 2 and a UE 3), allocates resources in the COT to the other UEs for transmission (for example, a slot 2 is allocated to the UE 2 for transmission, and a slot 3 is allocated to the UE 3 for transmission), and indicates the other UEs to perform feedback in a type 2B. The UE 1 listens to a transmission status of the UE 2 in the 16^{th} microsecond to the 25^{th} microsecond that are after the 1^{st} segment of transmission. If it is detected in 25 µs that a channel is not occupied, it indicates that the UE 2 does not perform transmission in the slot 2, and the UE 1 continues to occupy the channel (for example, the slot 2) in a type 2A, so that another UE cannot preempt the channel through LBT. On the contrary, if the UE 2 performs transmission in the slot 2, the UE 2 listens to a transmission status of the UE 3 in the 16^{th} microsecond to the 25^{th} microsecond that are after the transmission in the slot 2 ends. If it is detected in 25 µs that a channel is not occupied, it indicates that the UE 3 does not perform transmission in the slot 3, and the UE 2 continues to occupy the channel (for example, the slot 3) in the type 2A, so that another UE cannot preempt the channel through LBT. Optionally, the UE 2 may allocate updated COT-sharing information to the UE 3, where the updated COT-sharing information indicates a resource for the UE 3 to perform transmission. It should be noted that the resource indicated by the updated COT-sharing information sent to the UE 3 is still the slot 3.

According to the foregoing solution, usage of the channel in the 16^{th} microsecond to the 25^{th} microsecond is listened to, and the channel is occupied when being idle, to avoid a resource waste and COT interruption caused because a UE to which the COT resource is allocated does not perform access.

The following uses an example to describe a solution of how another UE that uses the COT resource of the UE 1 feeds back a transmission status of the another UE to a gNB.

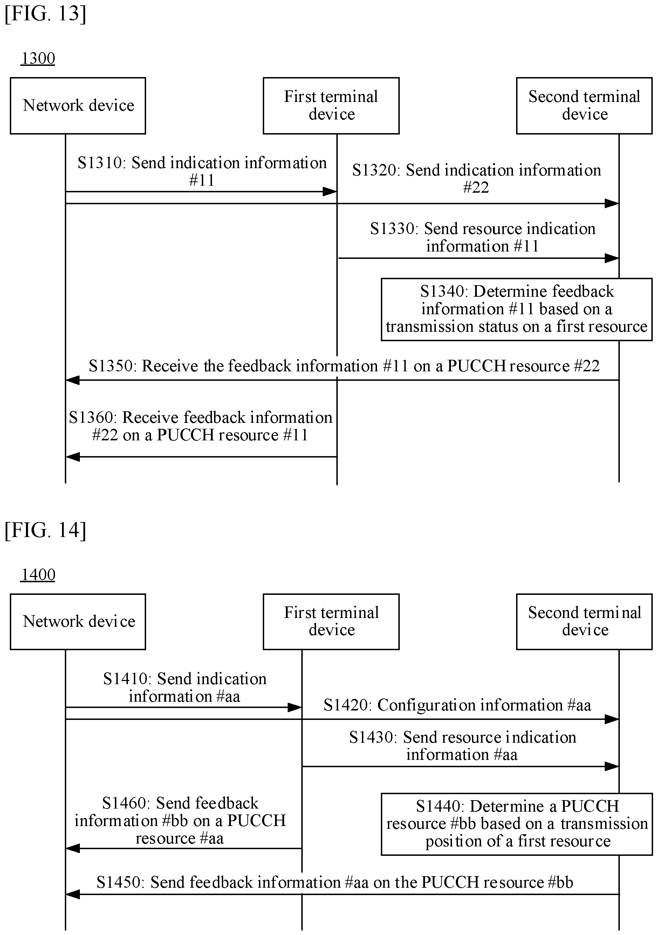

FIG. 13 is a schematic flowchart of a fourth communication method 1300 according to an embodiment of this application. As shown in FIG. 13, the method includes the following plurality of steps.

S1310 and S1320: A network device sends a plurality of pieces of indication information to a plurality of terminal devices.

For example, the network device sends indication information #11 (namely, an example of first indication information) to a first terminal device. Correspondingly, the first terminal device receives the indication information #11 from the network device.

Similarly, the network device sends indication information #22 (namely, an example of second indication information) to a second terminal device. Correspondingly, the second terminal device receives the indication information #22 from the network device.

The indication information #11 indicates a transmission resource and a PUCCH resource #11, and the indication information #22 indicates the transmission resource and a PUCCH resource #22.

For example, the network device may indicate the transmission resource and PUCCH resources to the plurality of terminal devices by using DCI.

It should be noted that a quantity of terminal devices is not specifically limited in this application, and a quantity of pieces of indication information sent by the network device one-to-one corresponds to the quantity of terminal devices.

S1330: The first terminal device sends resource indication information #11 (namely, an example of resource indication information) to the second terminal device.

Correspondingly, the second terminal device receives the resource indication information #11 from the first terminal device.

The resource indication information #11 indicates a first resource, the first resource is for the second terminal device to perform transmission, and the first resource is included in a COT preempted by the first terminal device.

It should be noted that a meaning, specific carried content, a sending manner, and the like of the resource indication information #11 are similar to those of the corresponding resource indication information #1, resource indication information #a, and resource indication information #A in the foregoing methods 400, 700, and 1000. For example, the resource indication information #11 may be a broadcast message, the resource indication information #11 may indicate a resource position for the second terminal device to perform feedback, and the resource indication information #11 may indicate the second terminal device to perform feedback in the COT in a first mode. In addition, for a specific implementation of this step, refer to step S430, S701, S1010, or the like above. For brevity, details are not described herein again.

S1340: The second terminal device determines feedback information #11 (namely, an example of first feedback information) based on a transmission status on the first resource.

For example, the transmission status of the second terminal device on the first resource includes one or more of the following: whether the second terminal device performs transmission on the first resource; whether there is a HARQ feedback corresponding to transmission performed by the second terminal device on the first resource; or a result of a HARQ feedback corresponding to transmission performed by the second terminal device on the first resource.

S1350: The network device receives the feedback information #11 from the second terminal device on the PUCCH resource #22.

Correspondingly, the second terminal device sends the feedback information #11 to the network device on the PUCCH resource #22.

The feedback information #11 indicates the transmission status of the second terminal device on the first resource, and the first resource is included in the COT preempted by the first terminal device.

In other words, the network device sends one piece of DCI to each terminal device that has a scheduling requirement, to indicate the transmission resource (namely, the COT) that may be preempted and a PUCCH resource corresponding to each UE. When failing to preempt the transmission opportunity, each UE (for example, the UE 2) may use, for transmission, the COT preempted by the UE 1, and report a HARQ result for the transmission through a PUCCH resource that belongs to the UE and that is indicated by the network device.

S1360: The first terminal device sends feedback information #22 to the network device on the PUCCH resource #11.

Correspondingly, the network device receives the feedback information #22 from the first terminal device on the PUCCH resource #11.

The feedback information #22 indicates a transmission status of the first terminal device in the COT preempted by the first terminal device.

For example, the transmission status of the first terminal device may be: whether the first terminal device shares, with the second terminal device, the COT preempted by the first terminal device, whether there is a HARQ feedback from a peer end for transmission performed by the first terminal device on the COT resource, and whether a result of the HARQ feedback is a success or a failure.

Therefore, in this implementation, the gNB may send a plurality of pieces of DCI to the plurality of UEs, to notify each UE of COT-sharing associated information, for example, a time-frequency domain position of the COT resource. It is assumed that only the UE 1 preempts the transmission opportunity through LBT, and other UEs (for example, the UE 2 and a UE 3) may obtain the transmission opportunity through COT-sharing of the UE 1. Each piece of DCI is for determining a PUCCH for one terminal device (for example, the UE 1, the UE 2, and the UE 3). The UE 1 that preempts the COT may perform, based on the transmission HARQ result of the UE 1, feedback to the base station on the PUCCH belonging to the UE 1. The UE 2 and the UE 3 that do not preempt the COT obtain the transmission opportunity through the COT-sharing, and perform, based on transmission HARQ results of the UE 2 and the UE 3 on the COT resource, feedback to the base station on PUCCHs belonging to the UE 2 and the UE 3.

It should be noted that, only a UE that does not preempt the COT and to which no COT resource is allocated feeds back a NACK or other indication information to indicate that there is no transmission resource. For a UE that does not preempt the COT but to which a resource is allocated through the COT-sharing, although a position of a transmission resource may be different from that of a resource indicated by DCI sent to the UE, a HARQ feedback is determined based on a transmission result, namely, a HARQ.

Further, the UE may determine a COT-sharing resource range (namely, a time domain range and/or a frequency domain range) based on a position of the resource indicated by the DCI. In the resource range, if there is the transmission opportunity and an ACK is fed back for transmission, the UE includes the ACK in a PUCCH to be sent to the gNB. Alternatively, in the resource range, if there is the transmission opportunity and a NACK is fed back for transmission, the UE includes the NACK in a PUCCH to be sent to the gNB.

According to the solution provided in this application, the second terminal device may determine, based on the indication information of the network device, the PUCCH resource for feeding back the transmission status, and report the transmission status of the second terminal device to the network device on the indicated PUCCH resource, so that the network device knows an actual transmission status of each terminal device, and a COT-sharing resource is appropriately allocated in a targeted manner subsequently, to avoid a COT resource waste.

It should be specially noted that, in step S405 of the communication method 400 and step S730 of the communication method 700, other UEs that use the COT-sharing information of the UE 1 may alternatively independently report respective transmission statuses to the network device.

This is because a resource allocated by the base station is fixed, and the UEs 2 may determine respective PUCCH resources based on different allocated COT-sharing resources, so that the UEs perform feedback on their respective PUCCHs. For example, if transmission is performed on a specific resource, the UE2 may determine a corresponding PUCCH resource based on a time-frequency resource on which each time of transmission is performed, and feed back a transmission status, for example, whether the transmission is performed or whether the transmission succeeds, to the base station on the PUCCH resource.

FIG. 14 is a schematic flowchart of a fifth communication method 1400 according to an embodiment of this application. As shown in FIG. 14, the method includes the following plurality of steps.

S1410: A network device sends indication information #aa to a first terminal device.

Correspondingly, the first terminal device receives the indication information #aa from the network device.

The indication information #aa indicates a transmission resource, the indication information #aa is further for determining to allocate, to a second terminal device, a resource in a channel occupancy time COT preempted by the first terminal device, and the indication information #aa includes identification information of the second terminal device.

S1420: The network device sends configuration information #aa to the second terminal device.

Correspondingly, the second terminal device receives the configuration information #aa from the network device.

The configuration information #aa is for configuring a periodic physical uplink control channel PUCCH resource for the second terminal device.

It should be noted that an execution sequence of step S1410 and step S1420 is not limited in this application.

It should be understood that after receiving the indication information #aa of the network device, the first terminal device may use the preempted COT resource with the second terminal device, to be specific, perform step S1430.

S1430: The first terminal device sends resource indication information #aa to the second terminal device.

Correspondingly, the second terminal device receives the resource indication information #aa from the first terminal device.

The resource indication information #aa indicates a first resource, the first resource is for the second terminal device to perform transmission, the first resource is included in the channel occupancy time COT preempted by the first terminal device, and the first resource includes a frequency domain resource and/or a time domain resource.

It should be noted that a meaning, specific carried content, a sending manner, and the like of the resource indication information #aa are similar to those of the corresponding resource indication information #1, resource indication information #a, resource indication information #A, and resource indication information #11 in the foregoing methods 400, 700, 1000, and 1300. For example, the resource indication information #aa may be a broadcast message, the resource indication information #aa may indicate a resource position for the second terminal device to perform feedback, and the resource indication information #aa may indicate the second terminal device to perform feedback in the COT in a first mode. In addition, for a specific implementation of this step, refer to step S430, S701, S1010, S1330, or the like above. For brevity, details are not described herein again.

It should be noted that the second terminal device may further determine, based on the periodic PUCCH resource configured by the network device and the first resource that is in the COT resource and that is allocated by the first terminal device, a PUCCH resource for feeding back a transmission status of the second terminal device to the network device, to be specific, may perform step S1440.

S1440: The second terminal device determines a PUCCH resource #bb based on a transmission position of the first resource, where the PUCCH resource #bb is included in the periodic PUCCH resource.

For example, the PUCCH resource #bb is the 1^{st} PUCCH resource spaced by a first slot after the first resource, or the PUCCH resource #bb is the 1^{st} PUCCH resource spaced by a first slot after a resource for a HARQ feedback corresponding to the transmission on the first resource.

Further, after performing transmission on the first resource, the second terminal device may feed back the transmission status of the second terminal device to the network device on the PUCCH resource #bb determined in step S1440, that is, perform step S1450.

S1450: The second terminal device sends feedback information #aa to the network device on the PUCCH resource #bb.

Correspondingly, the network device receives the feedback information #aa from the second terminal device on the PUCCH resource #bb.

The feedback information #bb indicates the transmission status of the second terminal device on the first resource. The first resource is included in the COT preempted by the first terminal device, and includes the frequency domain resource and/or the time domain resource. The PUCCH resource #bb is determined based on the transmission position of the first resource, and the PUCCH resource #bb is included in the periodic PUCCH resource.

For example, the transmission status of the second terminal device on the first resource includes one or more of the following: whether the second terminal device performs transmission on the first resource; whether there is a HARQ feedback corresponding to transmission performed by the second terminal device on the first resource; or a result of a HARQ feedback corresponding to transmission performed by the second terminal device on the first resource.

S 1460: The first terminal device sends feedback information #bb to the network device on a PUCCH resource #aa.

Correspondingly, the network device receives the feedback information #bb from the first terminal device on the PUCCH resource #aa.

It should be noted that after completing transmission on the COT resource preempted by the first terminal device, the first terminal device may report a transmission status of the first terminal device to the network device through the PUCCH resource #aa. In other words, an execution sequence between step S1460 and another step (for example, step S1450) is not limited in this application.

It should be understood that the PUCCH resource #aa may be configured by the network device for the first terminal device in advance before step S1440, and is for the first terminal device to feed back the transmission status of the first terminal device.

The feedback information #bb indicates the transmission status of the first terminal device in the COT preempted by the first terminal device.

For example, the transmission status of the first terminal device may be: whether the first terminal device shares, with the second terminal device, the COT preempted by the first terminal device, whether there is a HARQ feedback from a peer end for the transmission performed by the first terminal device on the COT resource, and whether a result of the HARQ feedback is a success or a failure.

Therefore, in this implementation, because resources allocated by the base station are fixed, the UEs may determine their respective PUCCH feedback channel resources based on COT-sharing resource positions, so that the UEs perform feedback on their respective channels. For example, if a UE 2 performs transmission on a specific resource, the UE 2 may determine a corresponding PUCCH resource based on a time-frequency resource on which the transmission is performed, and feed back a transmission status, for example, whether the transmission is performed or whether the transmission succeeds, to the base station on the PUCCH resource. In other words, PUCCH resources corresponding to a plurality of terminal devices are determined based on time domain resources used by the terminal devices to send data, and the time domain resources used by the terminal devices to send the data are indicated by the base station in DCI. In this implementation, the plurality of UEs do not use a same PUCCH for transmission, to be specific, a resource for each UE to feed back a PUCCH is associated with a frequency domain resource allocated through COT-sharing.

It should be noted that, to alleviate or avoid a problem that UEs cannot detect each other, this application further provides a technical solution. To be specific, before a network device sends COT-sharing signaling, a first terminal device may provide more information, for example, related information of another UE that is detected through listening and location information of the first terminal device, in advance to the network device for consideration by the base station during COT-sharing resource allocation.

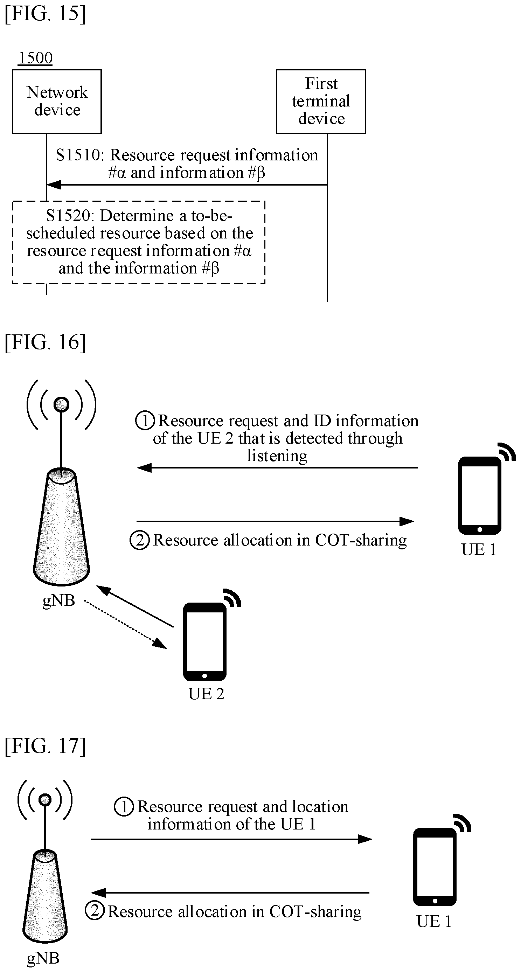

FIG. 15 is a schematic flowchart of a sixth communication method 600 according to an embodiment of this application. As shown in FIG. 15, the method includes the following plurality of steps.

S1510: A first terminal device sends resource request information #α (namely, an example of resource request information) and information #β (namely, an example of first information) to a network device.

Correspondingly, the network device receives the resource request information #α and the information #β from the first terminal device.

It should be noted that the resource request information #α and the information #β may be sent together, or may be sent simultaneously. This is not limited in this application.

The resource request information #α is for requesting a resource for the first terminal device to perform transmission, and the information #β includes one or more of the following: identification information of another terminal device detected by the first terminal device through listening, location information of the first terminal device, or identification information of the first terminal device. Optionally, the another terminal device includes at least one second terminal device.

For example, when reporting a BSR to the base station, the first terminal device includes the location information of the first terminal device, or includes a source ID and a destination ID that are obtained through SCI sensing.

For example, the resource request information is for requesting a transmission resource from the network device, and the network device may further indicate a position for the first terminal device to preempt the COT resource, in other words, data transmission is performed on the preempted COT resource.

For example, the identification information of the first terminal device may be an ID of the UE 1, may be an IP address of the UE 1, or may be an external identifier, for example, a GPSI or a zone ID (namely, a zone ID), of the UE 1. The location information of the first terminal device may be absolute coordinates or relative coordinates of a geographical location. This is not specifically limited in this application.

S1520: Optionally, the network device determines a to-be-scheduled resource based on the resource request information #α and the information #β.

It should be noted that, assuming that the UE 1 preempts the channel use opportunity in an LBT procedure, for a specific implementation in which the network device subsequently indicates, by using DCI, the UE 1 to share the preempted COT resource with another UE, refer to the foregoing methods 400 and 700. For brevity, details are not described herein again.

With reference to FIG. 16 and FIG. 17, the following specifically describes an example in which the first terminal device reports the resource request information #α and the information #β.

FIG. 16 is a diagram of reporting, by a UE 1, a resource request and information about a UE 2 detected through listening according to an embodiment of this application. As shown in FIG. 16, in step 1, the UE 1 senses, by listening to channel occupancy, an identifier of a UE 2 that occupies a channel. For example, the UE 1 demodulates received SCI content to obtain the identifier of the UE 2 that occupies the channel, and reports, to a base station, the identifier of the UE 2 detected through listening. The UE 1 reports the resource request to the base station to request a transmission resource. To be specific, during BSR transmission, the UE 1 includes, in a BSR, a source ID and/or a destination ID in the SCI detected through listening and a source ID or an identifier of the UE 1, and sends the BSR to the base station. A source of the identifier/ID may be related to a service and a random number selected by the UE 1, or may be an identifier value allocated by the base station to the UE 1. Further, in step 2, the base station may send DCI to the UE 1 based on a scheduling request received from the UE 2, to indicate COT-sharing related information.

According to the foregoing implementation, the UE 1 reports the identifier of the UE 2 detected through listening, so that when allocating COT-sharing information, the gNB arranges UEs (for example, the UE 1 and the UE 2) that can detect each other to perform transmission in one COT, to avoid a problem that the UEs cannot detect each other.

FIG. 17 is a diagram of reporting a resource request and location information of a UE 1 by the UE 1 according to an embodiment of this application. As shown in FIG. 17, in step 1, when reporting a BSR, the UE 1 includes the location information of the UE1 in the BSR, and sends the BSR to a base station, so that the base station subsequently groups, based on the location information of the UE 1, another UE (for example, a UE 2) that is close to or in a same area as the UE 1 into one COT-sharing group. Further, in step 2, the base station may send DCI to the UE 1 based on a scheduling request received from the UE 2, to indicate COT-sharing related information.

According to the foregoing implementation, UEs that can detect each other or UEs in a same area are grouped into a same COT-sharing group, so that a problem that another UE cannot detect a message sent by the UE 1 can be avoided to the greatest extent.

It should be understood that the communication method 600 is a secondary method. Because there is no feedback mechanism between UEs, it cannot be ensured that COT-sharing information sent by the UE 1 can be definitely detected, but a case in which UEs cannot detect each other can be reduced to some extent. Further, for a method in which the base station uses location information of the UE 1, refer to the foregoing communication method. For brevity, details are not described herein again.

In conclusion, this application provides a communication method and apparatus. The feedback mechanism between UEs is introduced, and the UE 1 allocates the COT resource to the UE 2 that has performed feedback, to reduce the resource waste and avoid the COT interruption. The transmission status of the UE 2 on the allocated COT resource preempted by the UE 1 is reported through the PUCCH resource for the UE 1, and the transmission status of the another UE on the allocated COT resource preempted by the UE 1 is reported through the PUCCH resource indicated by the base station, so that the base station subsequently knows the transmission status of the another UE having the scheduling requirement and further determines the to-be-scheduled resource, to improve spectrum resource utilization and improve the system transmission performance.

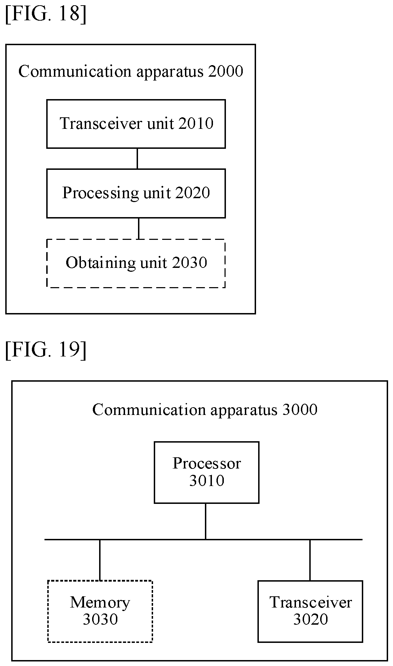

The foregoing describes in detail embodiments on a communication method side of this application with reference to FIG. 1 to FIG. 17. The following describes in detail embodiments on a communication apparatus side of this application with reference to FIG. 18 and FIG. 19. It should be understood that descriptions of the apparatus embodiments correspond to the descriptions of the method embodiments. Therefore, for a part that is not described in detail, refer to the foregoing method embodiments.

FIG. 18 is a block diagram of a communication apparatus according to an embodiment of this application. As shown in FIG. 18, the apparatus 2000 may include a transceiver unit 2010, a processing unit 2020, and an obtaining unit 2030. The transceiver unit 2010 may communicate with the outside. The processing unit 2020 is configured to process data. The obtaining unit 2030 is configured to receive data from the outside, and is equivalent to the transceiver unit 2010. Alternatively, the obtaining unit 2030 is further configured to perform internal processing to obtain data, and is equivalent to the processing unit 2020. The transceiver unit 2010 may also be referred to as a communication interface.

In a possible design, the apparatus 2000 may implement corresponding steps or procedures performed by the first terminal device (for example, the UE 1) in the foregoing method embodiments. The processing unit 2020 is configured to perform processing-related operations of the first terminal device in the foregoing method embodiments, and the transceiver unit 2010 is configured to perform sending/receiving-related operations of the first terminal device in the foregoing method embodiments.

In another possible design, the apparatus 2000 may implement corresponding steps or procedures performed by the second terminal device (for example, the UE 2) in the foregoing method embodiments. The transceiver unit 2010 is configured to perform sending/receiving-related operations of the second terminal device in the foregoing method embodiments, and the processing unit 2020 is configured to perform processing-related operations of the second terminal device in the foregoing method embodiments.

In still another possible design, the apparatus 2000 may implement corresponding steps or procedures performed by the network device (for example, the base station) in the foregoing method embodiments. The transceiver unit 2010 is configured to perform sending/receiving-related operations of the network device in the foregoing method embodiments, and the processing unit 2020 is configured to perform processing-related operations of the network device in the foregoing method embodiments.

It should be understood that the apparatus 2000 herein is implemented in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 2000 may be specifically a transmit end in the foregoing embodiments, and may be configured to perform procedures and/or steps corresponding to the transmit end in the foregoing method embodiments. Alternatively, the apparatus 2000 may be specifically a receive end in the foregoing embodiments, and may be configured to perform procedures and/or steps corresponding to the receive end in the foregoing method embodiments. To avoid repetition, details are not described herein again.

The device 1200 in the foregoing solutions has a function of implementing the corresponding steps performed by the transmit end in the foregoing methods, or has a function of implementing the corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform sending/receiving operations and related processing operations in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 18 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 19 shows a communication apparatus 3000 according to an embodiment of this application. As shown in FIG. 19, the apparatus 3000 includes a processor 3010 and a transceiver 3020. The processor 3010 and the transceiver 3020 communicate with each other through an internal connection path. The processor 3010 is configured to execute instructions, to control the transceiver 3020 to send a signal and/or receive a signal.

Optionally, the apparatus 3000 may further include a memory 3030. The memory 3030 communicates with the processor 3010 and the transceiver 3020 through the internal connection path. The memory 3030 is configured to store instructions. The processor 3010 may execute the instructions stored in the memory 3030.

In a possible implementation, the apparatus 3000 is configured to implement procedures and steps corresponding to the first terminal device (for example, the UE 1) in the foregoing method embodiments.

In another possible implementation, the apparatus 3000 is configured to implement procedures and steps corresponding to the network device (for example, the base station) in the foregoing method embodiments.

In still another possible implementation, the apparatus 3000 is configured to implement procedures and steps corresponding to the second terminal device (for example, the UE 2) in the foregoing method embodiments.

It should be understood that, the apparatus 3000 may be specifically the transmit end or the receive end in the foregoing embodiments, or may be a chip or a chip system. Correspondingly, the transceiver 3020 may be a transceiver circuit of the chip. This is not limited herein. Specifically, the apparatus 3000 may be configured to perform steps and/or procedures corresponding to the transmit end or the receive end in the foregoing method embodiments.

Optionally, the memory 3030 may include a read-only memory and a random access memory, and provide instructions and data to the processor. A part of the memory may further include a nonvolatile random access memory. For example, the memory may further store information of a device type. The processor 3010 may be configured to execute the instructions stored in the memory. When the processor 3010 executes the instructions stored in the memory, the processor 3010 is configured to perform steps and/or procedures of the method embodiments corresponding to the transmit end or the receive end.

In an implementation process, the steps in the foregoing methods may be implemented by a hardware integrated logic circuit in the processor, or by using instructions in a form of software. The steps in the methods disclosed with reference to embodiments of this application may be directly performed and completed by a hardware processor, or may be performed and completed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by a hardware integrated logic circuit in the processor, or by using instructions in a form of software. The foregoing processor may be a general-purpose processor, a digital signal processor, an application-specific integrated circuit, a field programmable gate array or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

According to the methods provided in embodiments of this application, this application further provides a computer program product. The computer program product includes computer program code. When the computer program code is run on a computer, the computer is enabled to perform the methods in the foregoing embodiments.

According to the methods provided in embodiments of this application, this application further provides a computer-readable medium, storing program code. When the program code is run on a computer, the computer is enabled to perform the methods in the foregoing embodiments.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, to be specific, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device (which may be a personal computer, a server, an apparatus, or the like) to perform all or some of the steps of the methods described in embodiments of this application. The foregoing storage medium includes: any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first terminal device, first information to at least one second terminal device, wherein the first information indicates the at least one second terminal device to perform feedback;
receiving, by the first terminal device, a feedback of a third terminal device, wherein the third terminal device is a terminal device that is in the at least one second terminal device and that has performed feedback; and
sending, by the first terminal device, first resource indication information, wherein the first resource indication information indicates a first resource, the first resource is for the third terminal device to perform transmission, the first resource is comprised in a channel occupancy time COT preempted by the first terminal device, and the first resource comprises a frequency domain resource and/or a time domain resource.

2. The method according to claim 1, wherein the first information further indicates at least one resource position for the at least one second terminal device to perform feedback, and the at least one second terminal device one-to-one corresponds to the at least one resource position.

3. The method according to claim 1 or 2, wherein before the sending, by a first terminal device, first information to at least one second terminal device, the method further comprises:
receiving, by the first terminal device, second information from a network device, wherein the second information is for determining to allocate, to the at least one second terminal device, a resource in the COT preempted by the first terminal device, and the second information comprises identification information of the at least one second terminal device.

4. The method according to any one of claims 1 to 3, wherein the first information further indicates the at least one second terminal device to perform feedback in the COT in a first mode; and after the sending, by a first terminal device, first information to at least one second terminal device, the method further comprises: listening to, by the first terminal device, whether the at least one second terminal device performs feedback in a first time period since the first terminal device performs transmission, wherein a start moment of the first time period is determined based on the first mode.

5. The method according to any one of claims 1 to 4, wherein after the sending, by the first terminal device, first resource indication information, the method further comprises:
listening to, by the first terminal device, a transmission status of the third terminal device on the first resource.

6. The method according to claim 5, wherein the transmission status of the third terminal device on the first resource comprises one or more of the following:
whether the third terminal device performs transmission on the first resource;
whether there is a hybrid automatic repeat request HARQ feedback corresponding to transmission performed by the third terminal device on the first resource; or a result of HARQ feedback corresponding to transmission performed by the third terminal device on the first resource.

7. The method according to any one of claims 1 to 6, wherein the method further comprises:
sending, by the first terminal device, third information to the network device, wherein the third information indicates one or more of the following:
a transmission status of the at least one second terminal device;
the transmission status of the third terminal device;
a fourth terminal device that does not perform feedback, wherein the fourth terminal device is comprised in the at least one second terminal device;
a fifth terminal device that does not perform transmission on the first resource; a sixth terminal device that fails to perform transmission on the first resource; or
a seventh terminal device that successfully performs transmission on the first resource, wherein
the fifth terminal device, the sixth terminal device, and the seventh terminal device are comprised in the third terminal device.

8. The method according to any one of claims 3 to 7, wherein before the receiving, by the first terminal device, second information from a network device, the method further comprises:
sending, by the first terminal device, resource request information and fourth information to the network device, wherein the resource request information is for requesting a resource for the first terminal device to perform transmission, and the fourth information comprises one or more of the following:
identification information of another terminal device detected by the first terminal device through listening, wherein the another terminal device comprises the at least one second terminal device;
location information of the first terminal device; or
identification information of the first terminal device.

9. A communication method, comprising:
receiving, by a network device, third information from a first terminal device, wherein the third information indicates a transmission status of at least one second terminal device on a resource in a channel occupancy time COT preempted by the first terminal device; and
determining, by the network device, a to-be-scheduled resource based on the third information.

10. The method according to claim 9, wherein before the receiving, by a network device, third information from a first terminal device, the method further comprises:
sending, by the network device, second information to the first terminal device, wherein the second information is for determining to allocate, to the at least one second terminal device, the resource in the COT preempted by the first terminal device, and the second information comprises identification information of the at least one second terminal device.

11. The method according to claim 10, wherein before the sending, by the network device, second information to the first terminal device, the method further comprises:
receiving, by the network device, a scheduling request message from the at least one second terminal device, wherein the scheduling request message is for requesting a resource for transmission, and comprises the identification information of the at least one second terminal device.

12. The method according to any one of claims 9 to 11, wherein the transmission status of the at least one second terminal device comprises one or more of the following:
a transmission status of a third terminal device on the resource in the COT preempted by the first terminal device, wherein the third terminal device is a terminal device that is in the at least one second terminal device and that has performed feedback to the first terminal device;
a fourth terminal device that does not perform feedback to the first terminal device, wherein the fourth terminal device is comprised in the at least one second terminal device;
a fifth terminal device that does not perform transmission on the resource in the COT preempted by the first terminal device;
a sixth terminal device that fails to perform transmission on the resource in the COT preempted by the first terminal device; or
a seventh terminal device that successfully performs transmission on the resource in the COT preempted by the first terminal device, wherein
the fifth terminal device, the sixth terminal device, and the seventh terminal device are comprised in the third terminal device.

13. The method according to claim 12, wherein the transmission status of the third terminal device on the resource in the COT preempted by the first terminal device comprises one or more of the following:
whether the third terminal device performs transmission on a first resource;
whether there is a HARQ feedback corresponding to transmission performed by the third terminal device on a first resource; or
a result of a HARQ feedback corresponding to transmission performed by the third terminal device on a first resource, wherein
the first resource is a resource for the third terminal device to perform transmission.

14. The method according to claim 10 or 11, wherein before the sending, by the network device, second information to the first terminal device, the method further comprises:
receiving, by the network device, resource request information and fourth information from the first terminal device, wherein the resource request information is for requesting a resource for the first terminal device to perform transmission,
and the fourth information comprises one or more of the following:
identification information of another terminal device detected by the first terminal device through listening, wherein the another terminal device comprises the at least one second terminal device;
location information of the first terminal device; or
identification information of the first terminal device.

15. A communication method, comprising:
obtaining, by a first terminal device, a transmission status of a second terminal device on a first resource, wherein the first resource is comprised in a channel occupancy time COT preempted by the first terminal device, and the first resource comprises a time domain resource and/or a frequency domain resource;
determining, by the first terminal device, first feedback information based on the transmission status of the second terminal device on the first resource; and sending, by the first terminal device, the first feedback information to a network device.

16. The method according to claim 15, wherein before the obtaining, by a first terminal
device, a transmission status of a second terminal device on a first resource, the method further comprises:
sending, by the first terminal device, first resource indication information to the second terminal device, wherein the first resource indication information indicates the first resource occupied by the second terminal device for transmission.

17. The method according to claim 16, wherein before the sending, by the first terminal device, first resource indication information to the second terminal device, the method further comprises:
sending, by the first terminal device, first information to the second terminal device, wherein the first information indicates the second terminal device to perform feedback; and
receiving, by the first terminal device, a feedback of the second terminal device.

18. The method according to claim 16 or 17, wherein before the sending, by the first terminal device, first resource indication information to the second terminal device, the method further comprises:
receiving, by the first terminal device, second information from the network device, wherein the second information is for determining to allocate, to the second terminal device, the first resource in the COT preempted by the first terminal device, and the second information comprises identification information of the second terminal device.

19. The method according to any one of claims 15 to 18, wherein the obtaining, by a first terminal device, a transmission status of a second terminal device on a first resource comprises:
receiving, by the first terminal device, a feedback message from the second terminal device; and
determining, by the first terminal device, the transmission status of the second terminal device on the first resource based on the feedback message.

20. The method according to any one of claims 17 to 19, wherein the first resource indication information further indicates the second terminal device to perform feedback in the COT in a first mode; and after the sending, by the first terminal device, first information to the second terminal device, the method further comprises:
listening to, by the first terminal device, whether the second terminal device performs feedback in a first time period since the first terminal device performs transmission, wherein a start moment of the first time period is determined based on the first mode.

21. The method according to any one of claims 15 to 18, wherein the obtaining, by a first terminal device, a transmission status of a second terminal device on a first resource comprises:
listening to, by the first terminal device, the transmission status of the second terminal device on the first resource.

22. The method according to any one of claims 15 to 21, wherein the transmission status of the second terminal device on the first resource comprises one or more of the following:
whether the second terminal device performs transmission on the first resource;
whether there is a hybrid automatic repeat request HARQ feedback corresponding to transmission performed by the second terminal device on the first resource; or
a result of a HARQ feedback corresponding to transmission performed by the second terminal device on the first resource.

23. The method according to claim 21 or 22, wherein the method further comprises: performing, by the first terminal device, transmission on the first resource when determining that the second terminal device does not perform transmission on the first resource.

24. The method according to any one of claims 15 to 23, wherein the first feedback information further indicates one or more of the following:
a third terminal device that does not perform transmission on the first resource;
a fourth terminal device that fails to perform transmission on the first resource;
a fifth terminal device that successfully performs transmission on the first resource; or
a sixth terminal device that does not perform feedback, wherein
the third terminal device, the fourth terminal device, the fifth terminal device, and
the sixth terminal device are comprised in the second terminal device.

25. The method according to any one of claims 18 to 23, wherein before the receiving, by the first terminal device, second information from the network device, the method further comprises:
sending, by the first terminal device, resource request information and third information to the network device, wherein the resource request information is for requesting a resource for the first terminal device to perform transmission, and the third information comprises one or more of the following:
identification information of another terminal device detected by the first terminal device through listening, wherein the another terminal device comprises the second terminal device;
location information of the first terminal device; or
identification information of the first terminal device.

26. A communication method, comprising:
receiving, by a network device, first feedback information from a first terminal device, wherein the first feedback information indicates a transmission status of a second terminal device on a first resource, the first resource is comprised in a channel occupancy time COT preempted by the first terminal device, and the first resource comprises a time domain resource and/or a frequency domain resource; and
determining, by the network device, a to-be-scheduled resource based on the first feedback information.

27. The method according to claim 26, wherein before the receiving, by a network device, first feedback information from a first terminal device, the method further comprises:
sending, by the network device, second information to the first terminal device, wherein the second information is for determining to allocate, to the second terminal device, the first resource in the COT preempted by the first terminal device, and the second information comprises identification information of the second terminal device.

28. The method according to claim 27, wherein before the sending, by the network device, second information to the first terminal device, the method further comprises:
receiving, by the network device, resource request information and third information from the first terminal device, wherein the resource request information is for requesting a resource for the first terminal device to perform transmission, and the third information comprises one or more of the following:
identification information of another terminal device detected by the first terminal device through listening, wherein the another terminal device comprises the second terminal device;
location information of the first terminal device; or
identification information of the first terminal device.

29. A communication method, comprising:
sending, by a first terminal device, first resource indication information to a second terminal device, wherein the first resource indication information indicates a first resource occupied by the second terminal device for transmission, the first resource is comprised in a channel opportunity time COT preempted by the first terminal device, and the first resource comprises a time domain resource and/or a frequency domain resource;
listening to, by the first terminal device, a transmission status of the second terminal device on the first resource; and
determining, by the first terminal device based on the transmission status of the second terminal device on the first resource, whether to occupy the first resource.

30. The method according to claim 29, wherein the method further comprises:
performing, by the first terminal device, transmission on the first resource when determining that the second terminal device does not perform transmission on the first resource.

31. The method according to claim 29 or 30, wherein the first resource indication information further indicates a second resource occupied by a third terminal device for transmission, the second resource is comprised in the COT preempted by the first terminal device, the second resource comprises a time domain resource and/or a frequency domain resource, and a time domain in which the second resource is located is after a time domain in which the first resource is located.

32. The method according to any one of claims 29 to 31, wherein the method further comprises:
sending, by the first terminal device, second resource indication information to the third terminal device, wherein the second resource indication information indicates a second resource, the second resource is for the third terminal device to perform transmission, the second resource is comprised in the COT preempted by the first terminal device, the second resource comprises a time domain resource and/or a frequency domain resource, and a time domain in which the second resource is located is after the time domain in which the first resource is located.

33. A communication method, comprising:
receiving, by a second terminal device, first resource indication information from a first terminal device, wherein the first resource indication information indicates a first resource occupied by the second terminal device for transmission, the first resource is comprised in a channel occupancy time COT preempted by the first terminal device, and the first resource comprises a time domain resource and/or a frequency domain resource; and
performing, by the second terminal device, transmission on the first resource.

34. A communication method, comprising:
sending, by a network device, first indication information to a first terminal device, and sending second indication information to a second terminal device, wherein the first indication information indicates a transmission resource and a first physical uplink control channel PUCCH resource, and the second indication information indicates the transmission resource and a second PUCCH resource; and
receiving, by the network device, first feedback information from the second terminal device on the second PUCCH resource, wherein the first feedback information indicates a transmission status of the second terminal device on a first resource, the first resource is comprised in a channel occupancy time COT preempted by the first terminal device, and the first resource comprises a frequency domain resource and/or a time domain resource.

35. The method according to claim 34, wherein the transmission status of the second terminal device on the first resource comprises one or more of the following:
whether the second terminal device performs transmission on the first resource;
whether there is a hybrid automatic repeat request HARQ feedback corresponding to transmission performed by the second terminal device on the first resource; or
a result of a HARQ feedback corresponding to transmission performed by the second terminal device on the first resource.

36. The method according to claim 34 or 35, wherein the method further comprises:
receiving, by the network device, second feedback information from the first terminal device on a first PUCCH resource, wherein the second feedback information indicates a transmission status of the first terminal device in the COT preempted by the first terminal device.

37. A communication method, comprising:
receiving, by a second terminal device, second indication information from a network device, wherein the second indication information indicates a transmission resource and a second physical uplink control channel PUCCH resource;
receiving, by the second terminal device, first resource indication information, wherein the first resource indication information indicates a first resource, the first resource is for the second terminal device to perform transmission, and the first resource is comprised in a channel occupancy time COT preempted by a first terminal device;
determining, by the second terminal device, first feedback information based on a transmission status on the first resource; and
sending, by the second terminal device, the first feedback information to the network device on the second PUCCH resource.

38. The method according to claim 37, wherein the transmission status of the second terminal device on the first resource comprises one or more of the following:
whether the second terminal device performs transmission on the first resource;
whether there is a HARQ feedback corresponding to transmission performed by the second terminal device on the first resource; or
a result of a HARQ feedback corresponding to transmission performed by the second terminal device on the first resource.

39. A communication method, comprising:
sending, by a network device, first indication information to a first terminal device, wherein the first indication information indicates a transmission resource, the first indication information is further for determining to allocate, to a second terminal device, a resource in a channel occupancy time COT preempted by the first terminal device, and the first indication information comprises identification information of the second terminal device;
sending, by the network device, configuration information to the second terminal device, wherein the configuration information is for configuring a periodic physical uplink control channel PUCCH resource; and
receiving, by the network device, first feedback information from the second terminal device on a second PUCCH resource, wherein the first feedback information indicates a transmission status of the second terminal device on a first resource, the first resource is comprised in the COT preempted by the first terminal device, the second PUCCH resource is determined based on a transmission position of the first resource, and the second PUCCH resource is comprised in the periodic PUCCH resource.

40. The method according to claim 39, wherein the transmission status of the second terminal device on the first resource comprises one or more of the following:
whether the second terminal device performs transmission on the first resource; whether there is a HARQ feedback corresponding to transmission performed by the second terminal device on the first resource; or
a result of a HARQ feedback corresponding to transmission performed by the second terminal device on the first resource.

41. A communication method, comprising:
receiving, by a second terminal device, first resource indication information, wherein the first resource indication information indicates a first resource, the first resource is for the second terminal device to perform transmission, and the first resource is comprised in a channel occupancy time COT preempted by a first terminal device;
receiving, by the second terminal device, configuration information from a network device, wherein the configuration information is for configuring a periodic physical uplink control channel PUCCH resource;
determining, by the second terminal device, a second PUCCH resource based on a transmission position of the first resource, wherein the second PUCCH resource is comprised in the periodic PUCCH resource; and
sending, by the second terminal device, first feedback information to the network device on the second PUCCH resource, wherein the first feedback information indicates a transmission status of the second terminal device on the first resource.

42. The method according to claim 41, wherein the transmission status of the second terminal device on the first resource comprises one or more of the following:
whether the second terminal device performs transmission on the first resource;
whether there is a HARQ feedback corresponding to transmission performed by the second terminal device on the first resource; or
a result of a HARQ feedback corresponding to transmission performed by the second terminal device on the first resource.

43. The method according to claim 41 or 42, wherein
the second PUCCH resource is a 1^{st} PUCCH resource spaced by a first slot after the first resource; or
the second PUCCH resource is the 1^{st} PUCCH resource spaced by a first slot after a resource for the HARQ feedback corresponding to the transmission on the first resource.

44. A communication apparatus, wherein the communication apparatus comprises:
a unit configured to perform the method according to any one of claims 1 to 8;
a unit configured to perform the method according to any one of claims 9 to 14;
a unit configured to perform the method according to any one of claims 15 to 25;
a unit configured to perform the method according to any one of claims 26 to 28;
a unit configured to perform the method according to any one of claims 29 to 32;
a unit configured to perform the method according to claim 33;
a unit configured to perform the method according to any one of claims 34 to 36;
a unit configured to perform the method according to claim 37 or 38;
a unit configured to perform the method according to claim 39 or 40; or
a unit configured to perform the method according to any one of claims 41 to 43.

45. A communication apparatus, wherein the communication apparatus comprises a processor, the processor is coupled to a memory, and the memory stores instructions; and when the instructions are run by the processor, the processor is enabled to perform the method according to any one of claims 1 to 8, the method according to any one of claims 9 to 14, the method according to any one of claims 15 to 25, the method according to any one of claims 26 to 28, the method according to any one of claims 29 to 32, the method according to claim 33, the method according to any one of claims 34 to 36, the method according to claim 37 or 38, the method according to claim 39 or 40, or the method according to any one of claims 41 to 43.

46. A communication apparatus, wherein the communication apparatus comprises a logic circuit, and the logic circuit is configured to be coupled to an input/output interface, and perform data transmission through the input/output interface, to perform the method according to any one of claims 1 to 8, the method according to any one of claims 9 to 14, the method according to any one of claims 15 to 25, the method according to any one of claims 26 to 28, the method according to any one of claims 29 to 32, the method according to claim 33, the method according to any one of claims 34 to 36, the method according to claim 37 or 38, the method according to claim 39 or 40, or the method according to any one of claims 41 to 43.

47. A chip, comprising: a processor, configured to invoke a computer program from a memory and run the computer program, so that a communication apparatus in which the chip is installed performs the method according to any one of claims 1 to 8, the method according to any one of claims 9 to 14, the method according to any one of claims 15 to 25, the method according to any one of claims 26 to 28, the method according to any one of claims 29 to 32, the method according to claim 33, the method according to any one of claims 34 to 36, the method according to claim 37 or 38, the method according to claim 39 or 40, or the method according to any one of claims 41 to 43.

48. A computer-readable storage medium, wherein the computer-readable storage medium is configured to store a computer program; and when the computer program is run on a computer, the computer is enabled to perform the method according to any one of claims 1 to 8, the method according to any one of claims 9 to 14, the method according to any one of claims 15 to 25, the method according to any one of claims 26 to 28, the method according to any one of claims 29 to 32, the method according to claim 33, the method according to any one of claims 34 to 36, the method according to claim 37 or 38, the method according to claim 39 or 40, or the method according to any one of claims 41 to 43.

49. A computer program product, wherein the computer program product comprises computer program code, wherein when the computer program code is run on a computer, the computer is enabled to implement the method according to any one of claims 1 to 8, the method according to any one of claims 9 to 14, the method according to any one of claims 15 to 25, the method according to any one of claims 26 to 28, the method according to any one of claims 29 to 32, the method according to claim 33, the method according to any one of claims 34 to 36, the method according to claim 37 or 38, the method according to claim 39 or 40, or the method according to any one of claims 41 to 43.
